# EUROPEAN PATENT SPECIFICATION

(11) **EP 4 328 692 B1**
(45) Date of publication and mention of the grant of the patent: **30.09.2026**
(21) Application number: 23190292.5
(22) Date of filing: 08.08.2023
(51) Int. Cl.: G05B 23/02

(54) **ALARM ANALYTICS FOR PRESCRIPTIVE RECOMMENDATIONS OF CONFIGURATION PARAMETERS FOR INDUSTRIAL PROCESS ALARMS**
ALARMANALYTIK FÜR VORGEGEBENE EMPFEHLUNGEN VON KONFIGURATIONSPARAMETER FÜR INDUSTRIELLE PROZESSALARME
ANALYSE D'ALARMES POUR RECOMMANDATIONS PRESCRIPTIVES DE PARAMÈTRES DE CONFIGURATION POUR ALARMES DE PROCESSUS INDUSTRIEL

(30) Priority: 16.08.2022 IN 202211046469; 20.07.2023 US 202318355822
(43) Date of publication of application: 28.02.2024
(73) Proprietor: Honeywell International Inc., Charlotte, NC 28202 (US)
(72) Inventor: SRINIVASAN, Srikant, Charlotte, 28202 (US); DEY, Satrujeet, Charlotte, 28202 (US); KUMARASAMY, Senthilkumar, Charlotte, 28202 (US); MANOHARAN, Karthick, Charlotte, 28202 (US); S, Ram Prasad, Charlotte, 28202 (US)
(74) Representative: Haseltine Lake Kempner LLP

(56) References cited:
- EP-A1- 1 179 245
- US-A1- 2007 194 920
- US-A1- 2018 322 770

## Description

### CROSS REFERENCE TO RELATED APPLICATIONS

This application claims priority to India Patent Application No. 202211046469, titled "ALARM ANALYTICS FOR PRESCRIPTIVE RECOMMENDATIONS OF CONFIGURATION PARAMETERS FOR INDUSTRIAL PROCESS ALARMS," and filed on August 16, 2022.

### TECHNICAL FIELD

The present disclosure relates generally to industrial control systems, and more particularly to management and configuration of industrial process alarms for industrial processes and/or industrial assets.

### BACKGROUND

Traditional alarm systems for an industrial process generally provide an operator with a pre-warning for an abnormal situation related to the industrial process to alert the operator regarding the abnormal situation. However, traditional alarm systems are often configured with inefficient alarm settings, resulting in excessive alarm rates known as "chattering alarms" or "nuisance alarms." For example, a traditional alarm system is often configured with a number of excessive alarms that go on and off repeatedly over a period of time, resulting in inefficiencies for related industrial processes and/or damage to related industrial assets. Reference may be made to US 2018/322770 A1 which relates to methods for analytics-driven alarm rationalization, assessment of operator response, and incident diagnosis and related systems. A method includes identifying changes in an alarm count for at least one alarm to be generated in an industrial process control and automation system. The changes in the alarm count are based on a plurality of different sets of alarm settings. The method also includes presenting the changes in the alarm count to a user and receiving a selection of one of the sets of alarm settings. The method further includes configuring the industrial process control and automation system with the selected set of alarm settings to enable the industrial process control and automation system to generate alarms using the selected set of alarm settings.

### SUMMARY

The details of some embodiments of the subject matter described in this specification are set forth in the accompanying drawings and the description below. Other features, aspects, and advantages of the subject matter will become apparent from the description, the drawings, and the claims.

The present invention is defined by the appended independent claims, to which reference should now be made. Specific embodiments are defined in the dependent claims. In an arrangement, a system includes one or more processors and a memory that stores one or more programs. In one or more arrangements, the one or more programs include instructions configured to transmit, to a server system, a request to obtain alarm tuning recommendation data for one or more alarm configuration parameters related to one or more industrial processes in an industrial environment in response to an action performed with respect to a first user interface configuration for an interactive user interface. In one or more arrangements, the request includes one or more alarm identifiers related to the one or more industrial processes. In one or more arrangements, in response to the request, the one or more programs additionally or alternatively include instructions configured to receive the alarm tuning recommendation data from the server system. In one or more arrangements, the alarm tuning recommendation data is configured based on the one or more alarm identifiers and alarm insight data associated with respective alarm count reduction predictions for the one or more alarm configuration parameters. In one or more arrangements, in response to the request, the one or more programs additionally or alternatively include instructions configured to alter the first user interface configuration for the interactive user interface based on the alarm tuning recommendation data to provide a second user interface configuration for the interactive user interface. In one or more arrangements, the second user interface configuration includes respective interactive display elements related to the one or more alarm identifiers. In one or more arrangements, the respective interactive display elements for the second user interface configuration are rendered via the interactive user interface based on the alarm tuning recommendation data.

In another arrangement, a computer-implemented method is provided. In one or more arrangements, the computer-implemented method provides for transmitting, to a server system, a request to obtain alarm tuning recommendation data for one or more alarm configuration parameters related to one or more industrial processes in an industrial environment in response to an action performed with respect to a first user interface configuration for an interactive user interface. In one or more arrangements, the request includes one or more alarm identifiers related to the one or more industrial processes. In one or more arrangements, in response to the request, the computer-implemented method additionally or alternatively provides for receiving the alarm tuning recommendation data from the server system. In one or more arrangement, the alarm tuning recommendation data is configured based on the one or more alarm identifiers and alarm insight data associated with respective alarm count reduction predictions for the one or more alarm configuration parameters. In one or more arrangements, in response to the request, the computer-implemented method additionally or alternatively provides for altering the first user interface configuration for the interactive user interface based on the alarm tuning recommendation data to provide a second user interface configuration for the interactive user interface. In one or more arrangements, the second user interface configuration includes respective interactive display elements related to the one or more alarm identifiers. In one or more arrangements, the respective interactive display elements for the second user interface configuration are rendered via the interactive user interface based on the alarm tuning recommendation data.

In yet another arrangement, a computer program product includes at least one computer-readable storage medium having program instructions embodied thereon. In one or more arrangements, the program instructions are executable by a processor to cause the processor to transmit, to a server system, a request to obtain alarm tuning recommendation data for one or more alarm configuration parameters related to one or more industrial processes in an industrial environment in response to an action performed with respect to a first user interface configuration for an interactive user interface. In one or more arrangements, the request includes one or more alarm identifiers related to the one or more industrial processes. In one or more arrangements, in response to the request, the program instructions are additionally or alternatively executable by the processor to cause the processor to receive the alarm tuning recommendation data from the server system. In one or more arrangements, the alarm tuning recommendation data is configured based on the one or more alarm identifiers and alarm insight data associated with respective alarm count reduction predictions for the one or more alarm configuration parameters. In one or more arrangements, in response to the request, the program instructions are additionally or alternatively executable by the processor to cause the processor to alter the first user interface configuration for the interactive user interface based on the alarm tuning recommendation data to provide a second user interface configuration for the interactive user interface. In one or more arrangements, the second user interface configuration includes respective interactive display elements related to the one or more alarm identifiers. In one or more arrangements, the respective interactive display elements for the second user interface configuration are rendered via the interactive user interface based on the alarm tuning recommendation data.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an exemplary networked computing system environment, in accordance with one or more embodiments described herein;
FIG. 2 illustrates a schematic block diagram of a framework of an IoT platform of the networked computing system, in accordance with one or more embodiments described herein;
FIG. 3 illustrates an exemplary user computing device system, in accordance with one or more embodiments described herein;
FIG. 4 illustrates an exemplary user computing device, in accordance with one or more embodiments described herein;
FIG. 5 illustrates a system that provides an exemplary environment related to alarm performance optimization, in accordance with one or more embodiments described herein;
FIG. 6 illustrates another system that provides an exemplary environment related to alarm performance optimization, in accordance with one or more embodiments described herein;
FIG. 7 illustrates an exemplary system associated with an interactive user interface, in accordance with one or more embodiments described herein;
FIG. 8 illustrates a process flow diagram for obtaining alarm tuning recommendations for alarm configuration parameters for industrial process alarms, in accordance with one or more embodiments described herein;
FIG. 9 illustrates an exemplary industrial environment system integrated with an alarm performance optimizer system, in accordance with one or more embodiments described herein;
FIG. 10 illustrates a networking hierarchy of an exemplary industrial environment system integrated with an alarm performance optimizer system, in accordance with one or more embodiments described herein;
FIG. 11 illustrates technical benefits realized by an exemplary industrial processing environment employing one or more embodiments described herein;
FIGS. 12-24 respectively illustrate an exemplary interactive user interface, in accordance with one or more embodiments described herein;
FIG. 25 illustrates a flow diagram for providing prescriptive recommendations of configuration parameters for industrial process alarms, in accordance with one or more embodiments described herein; and
FIG. 26 illustrates a functional block diagram of a computer that may be configured to execute techniques described in accordance with one or more embodiments described herein.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments.

In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some embodiments, or it can be excluded.

In general, the present disclosure provides for an "Internet-of-Things" or "IoT" platform for enterprise performance management that uses real-time accurate models and visual analytics to deliver intelligent actionable recommendations for sustained peak performance of an enterprise or organization. The IoT platform is an extensible platform that is portable for deployment in any cloud or data center environment for providing an enterprise-wide, top to bottom view, displaying the status of processes, assets, people, and safety. Further, the IoT platform of the present disclosure supports end-to-end capability to execute digital twins against process data and to translate the output into actionable insights, as detailed in the following description.

Traditional alarm systems for an industrial process generally provide an operator with a pre-warning for an abnormal situation related to the industrial process to alert the operator regarding the abnormal situation. However, traditional alarm systems are often configured with inefficient alarm settings, resulting in excessive alarm rates known as "nuisance Alarms" (e.g., chattering and/or fleeting alarms) For example, a traditional alarm system is often configured with settings that produce a number of excessive alarms that go on and off repeatedly over a period of time, resulting in inefficiencies for related industrial processes and/or damage to related industrial assets.

An exemplary technique to tune alarm system settings (e.g., for removing chattering alarms) includes adding setting on-delay between annunciation of alarms such that an alarm will not annunciate until the alarm has been outside an alarm limit for a certain amount of time. Additionally or alternatively, an exemplary technique to tune alarm system settings (e.g., for removing chattering alarms) includes adding off-delay setting such that an alarm will not turn off until the alarm has returned within an alarm limit for a certain amount of time. However, the tuning of alarm settings using such techniques is often an untenable task due to the sheer volume of alarm tags generally included in an alarm system. An alarm tag generally establishes a rule/condition for an alarm system process such as, for example, when an alarm should be triggered. For instance, an alarm tag may measure and/or set one or more rules/conditions for one or more variables of a single process in a single stage of an industrial plant system such as, for example, fluid pressure, flow, level, temperature, etc.

Given the scope of enterprise-level industrial plants, it can take thousands of man-hours to analyze an alarm system to provide functional and/or effective changes to increase industrial process efficiency and/or safety. For example, an industrial control system with more than 20,000 tags that each contain 4-6 alarms can take more than 600 man-hours to review 20% of the alarms. Furthermore, a small group of alarm experts and/or subject matter experts are generally responsible for performing alarm tuning, and therefore efficiency of the industrial processes are generally interrelated to the expertise of the alarm experts and/or subject matter experts. Moreover, collating alarm data and/or streamlining alarm data for alarms generally involves significant manual effort.

Thus, to address these and/or other issues, various embodiments of the present disclosure relate to systems, computer-implemented methods, and/or computer-program products directed to alarm analytics for providing prescriptive recommendations of configuration parameters for industrial process alarms. In various embodiments, analytics-based recommendations are generated for managing and/or tuning industrial process alarms. For example, alarm data (e.g., historical alarm data, real-time alarm data, alarm configuration data, alarm event data, etc.) can be analyzed to identify and/or recommend optimized alarm tuning parameters for one or more industrial processes and/or one or more industrial assets. In various embodiments, alarm counts can be simulated for a certain interval of time based on predicted alarm settings. Additionally, a predicted percentage of reduction in alarm counts can be provided based on the simulation. In various embodiments, alarm management analytics is provided to minimize a number of excessive alarms for an industrial process and/or an industrial asset. In various embodiments, the alarm management analytics provides improvement of performance for one or more industrial processes and/or one or more industrial assets.

In accordance with an embodiment, a request to obtain alarm tuning recommendation data for one or more alarm configuration parameters related to one or more industrial processes in an industrial environment is provided. The request can be transmitted to a server system in response to an action performed with respect to a first user interface configuration for an interactive user interface. In various embodiments, the request includes at least one or more alarm identifiers/conditions related to the one or more industrial processes. In response to the request, the alarm tuning recommendation data can be received from the server system. In one or more embodiments, the alarm tuning recommendation data is configured based on the one or more alarm identifiers/conditions and alarm insight data associated with respective alarm count reduction predictions for the one or more alarm configuration parameters. Additionally, in response to the request, the first user interface configuration for the interactive user interface is altered based on the alarm tuning recommendation data to provide a second user interface configuration for the interactive user interface. The second user interface configuration can include respective interactive display elements related to the one or more alarm identifiers. Additionally, the respective interactive display elements for the second user interface configuration can be rendered via the interactive user interface based on the alarm tuning recommendation data.

In certain embodiments, the interactive user interface is provided via a desktop application for an alarm management platform for one or more industrial processes and/or one or more industrial assets. In certain embodiments, the interactive user interface is provided via a mobile application for an alarm management platform for one or more industrial processes and/or one or more industrial assets. The interactive user interface can additionally or alternatively be provided via a web interface for an alarm management platform for one or more industrial processes and/or one or more industrial assets. In various embodiments, the interactive user interface facilitates digitized management of one or more alarms and related alarm settings for one or more industrial processes and/or one or more industrial assets. In various embodiments, the interactive user interface additionally or alternatively provides an optimal path to present one or more alarm insights (e.g., one or more alarm count reduction predictions, etc.) related to one or more industrial processes and/or one or more industrial assets. Additionally, the interactive user interface provides for improved operational efficiency of one or more industrial processes and/or one or more industrial assets, improved performance of one or more industrial processes and/or one or more industrial assets, reduced maintenance time related to one or more industrial processes and/or one or more industrial assets, improved response time for issues related to one or more industrial processes and/or one or more industrial assets, etc.

In various embodiments, the mobile application platform interfaces with various backend products of connected asset offering, packages various alarm recommendations, and/or provides an integrated view of alarm recommendations via the interactive user interface. For instance, in various embodiments, the mobile application platform interfaces with various different products and/or machine learning models hosted by a cloud platform. In various embodiments, a navigational interactive display element associated with the interactive user interface is configured to provide a shortest possible time to acquire and/or display the alarm insights. As such, in various embodiments, the mobile application platform facilitates faster response to tune alarm configuration parameters.

In various embodiments, the interactive user interface is an enterprise application that allows a user to remotely manage, investigate, and/or resolve issues associated with alarms for one or more industrial processes and/or one or more industrial assets. The interactive user interface also provides context awareness for alarms related to one or more industrial processes and/or one or more industrial assets. The interactive user interface also facilitates managing different field protocols with multiple levels of industrial control systems and/or intermediate supervisory control and data acquisition (SCADA) server systems while also providing uniform interactions. In various embodiments, the interactive user interface is configured to provide control of industrial assets (e.g., equipment, controllers) remotely using one or more protocols and/or with respect to different types of asset management systems. In various embodiments, the interactive user interface is accessible via a web portal and/or an application interface.

In one or more embodiments, the interactive user interface provides notifications related to alarm tuning recommendations. In certain embodiments, the notifications are personalized for a user associated with the interactive user interface. In one or more embodiments, the interactive user interface provides contextual information related to alarm tuning recommendations. The contextual information includes, for example, alarm configuration values, predicted alarm reduction rates, other configuration parameters, historical alarm trends, alarm relationship, and/or other information that provides contextual awareness for alarms.

In various embodiments, the interactive user interface facilitates display of graphics and/or other visualizations related to alarm tuning recommendations. For example, in various embodiments, the interactive user interface provides dynamically generated graphics that show configuration of, relationships between, and/or predictions of reduction of alarm rates for alarm tuning recommendations. In various embodiments, the interactive user interface facilitates operations and/or scheduling associated altering alarm configuration parameters and/or other alarm settings.

In various embodiments, machine learning is employed to logically group and/or present alarm tuning recommendations. In various embodiments, machine learning is employed to identify and prioritize the alarm configuration recommendation that optimally reflect improvement opportunities for one or more industrial processes and/or one or more industrial assets.

As such, by employing one or more techniques disclosed herein, alarm performance for one or more industrial processes and/or one or more industrial assets is optimized. For example, by employing one or more techniques disclosed herein, alarms can be optimally tuned for improved performance of one or more industrial processes and/or one or more industrial assets is optimized. Moreover, by employing one or more techniques disclosed herein, improved insights for one or more industrial processes and/or one or more industrial assets is provided to a user via improved visual indicators associated with an interactive user interface. Additionally, performance of a processing system associated with data analytics is improved by employing one or more techniques disclosed herein. For example, a number of computing resources, a number of a storage requirements, and/or number of errors associated with management of alarms for one or more industrial processes and/or one or more industrial assets is reduced by employing one or more techniques disclosed herein.

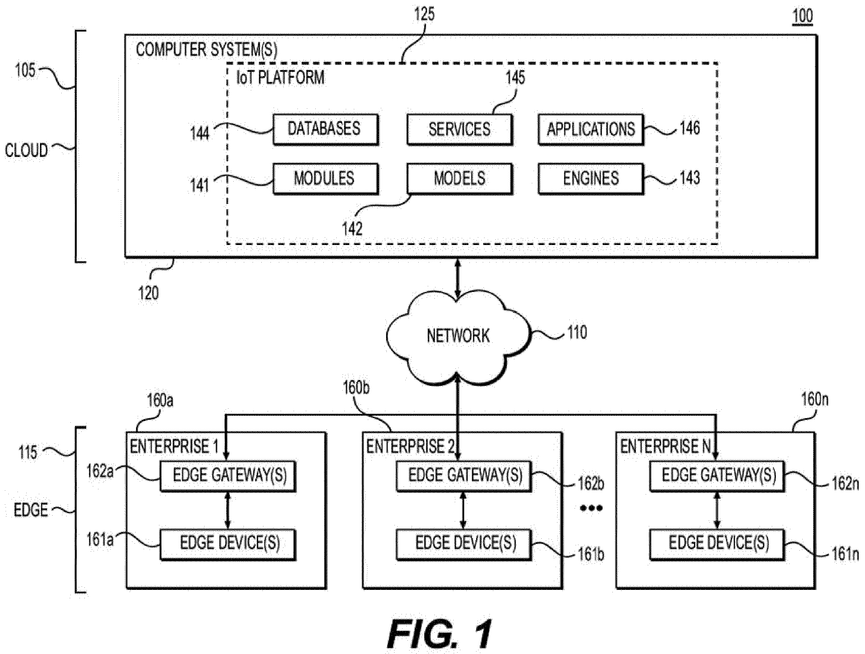

FIG. 1 illustrates an exemplary networked computing system environment 100, according to the present disclosure. As shown in FIG. 1, networked computing system environment 100 is organized into a plurality of layers including a cloud 105, a network 110, and an edge 115. In one or more embodiments, the cloud 105 is a cloud layer, the network 110 is a network layer, and/or the edge 115 is an edge layer. As detailed further below, components of the edge 115 are in communication with components of the cloud 105 via network 110.

In various embodiments, network 110 is any suitable network or combination of networks and supports any appropriate protocol suitable for communication of data to and from components of the cloud 105 and between various other components in the networked computing system environment 100 (e.g., components of the edge 115). According to various embodiments, network 110 includes a public network (e.g., the Internet), a private network (e.g., a network within an organization), or a combination of public and/or private networks. According to various embodiments, network 110 is configured to provide communication between various components depicted in FIG. 1. According to various embodiments, network 110 comprises one or more networks that connect devices and/or components in the network layout to allow communication between the devices and/or components. For example, in one or more embodiments, the network 110 is implemented as the Internet, a wireless network, a wired network (e.g., Ethernet), a local area network (LAN), a Wide Area Network (WANs), Bluetooth, Near Field Communication (NFC), or any other type of network that provides communications between one or more components of the network layout. In some embodiments, network 110 is implemented using cellular networks, satellite, licensed radio, or a combination of cellular, satellite, licensed radio, and/or unlicensed radio networks.

Components of the cloud 105 include one or more computer systems 120 that form a so-called "Internet-of-Things" or "IoT" platform 125. It should be appreciated that "IoT platform" is an optional term describing a platform connecting any type of Internet-connected device, and should not be construed as limiting on the types of computing systems useable within IoT platform 125. In particular, in various embodiments, computer systems 120 includes any type or quantity of one or more processors and one or more data storage devices comprising memory for storing and executing applications or software modules of networked computing system environment 100. In one embodiment, the processors and data storage devices are embodied in server-class hardware, such as enterprise-level servers. For example, in an embodiment, the processors and data storage devices comprise any type or combination of application servers, communication servers, web servers, super-computing servers, database servers, file servers, mail servers, proxy servers, and/ virtual servers. Further, the one or more processors are configured to access the memory and execute processor-readable instructions, which when executed by the processors configures the processors to perform a plurality of functions of the networked computing system environment 100. In certain embodiments, the networked computing system environment 100 is an on-premise networked computing system where the edge 115 is configured as a process control network and the cloud 105 is configured as an enterprise network.

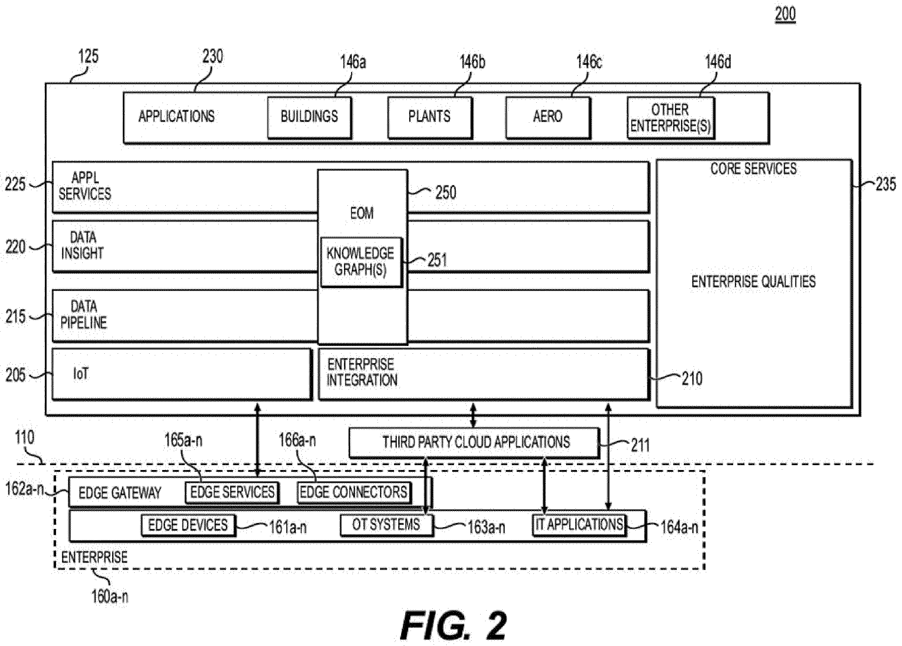

Computer systems 120 further include one or more software components of the IoT platform 125. For example, in one or more embodiments, the software components of computer systems 120 include one or more software modules to communicate with user devices and/or other computing devices through network 110. For example, in one or more embodiments, the software components include one or more modules 141, models 142, engines 143, databases 144, services 145, and/or applications 146, which may be stored in/by the computer systems 120 (e.g., stored on the memory), as detailed with respect to FIG. 2 below. According to various embodiments, the one or more processors are configured to utilize the one or more modules 141, models 142, engines 143, databases 144, services 145, and/or applications 146 when performing various methods described in this disclosure.

Accordingly, in one or more embodiments, computer systems 120 execute a cloud computing platform (e.g., IoT platform 125) with scalable resources for computation and/or data storage, and may run one or more applications on the cloud computing platform to perform various computer-implemented methods described in this disclosure. In some embodiments, some of the modules 141, models 142, engines 143, databases 144, services 145, and/or applications 146 are combined to form fewer modules, models, engines, databases, services, and/or applications. In some embodiments, some of the modules 141, models 142, engines 143, databases 144, services 145, and/or applications 146 are separated into separate, more numerous modules, models, engines, databases, services, and/or applications. In some embodiments, some of the modules 141, models 142, engines 143, databases 144, services 145, and/or applications 146 are removed while others are added.

The computer systems 120 are configured to receive data from other components (e.g., components of the edge 115) of networked computing system environment 100 via network 110. Computer systems 120 are further configured to utilize the received data to produce a result. According to various embodiments, information indicating the result is transmitted to users via user computing devices over network 110. In some embodiments, the computer systems 120 is a server system that provides one or more services including providing the information indicating the received data and/or the result(s) to the users. According to various embodiments, computer systems 120 are part of an entity which include any type of company, organization, or institution that implements one or more IoT services. In some examples, the entity is an IoT platform provider.

Components of the edge 115 include one or more enterprises 160a-160n each including one or more edge devices 161a-161n and one or more edge gateways 162a-162n. For example, a first enterprise 160a includes first edge devices 161a and first edge gateways 162a, a second enterprise 160b includes second edge devices 161b and second edge gateways 162b, and an nth enterprise 160n includes nth edge devices 161n and nth edge gateways 162n. As used herein, enterprises 160a-160n represent any type of entity, facility, or vehicle, such as, for example, companies, divisions, buildings, manufacturing plants, warehouses, real estate facilities, laboratories, aircraft, spacecraft, automobiles, ships, boats, military vehicles, oil and gas facilities, or any other type of entity, facility, and/or entity that includes any number of local devices.

According to various embodiments, the edge devices 161a-161n represent any of a variety of different types of devices that may be found within the enterprises 160a-160n. Edge devices 161a-161n are any type of device configured to access network 110, or be accessed by other devices through network 110, such as via an edge gateway 162a-162n. According to various embodiments, edge devices 161a-161n are "IoT devices" which include any type of network-connected (e.g., Internet-connected) device. For example, in one or more embodiments, the edge devices 161a-161n include assets, sensors, actuators, processors, computers, valves, pumps, ducts, vehicle components, cameras, displays, doors, windows, security components, boilers, chillers, pumps, air handler units, HVAC components, factory equipment, and/or any other devices that are connected to the network 110 for collecting, sending, and/or receiving information. Each edge device 161a-161n includes, or is otherwise in communication with, one or more controllers for selectively controlling a respective edge device 161a-161n and/or for sending/receiving information between the edge devices 161a-161n and the cloud 105 via network 110. With reference to FIG. 2, in one or more embodiments, the edge 115 include operational technology (OT) systems 163a-163n and information technology (IT) applications 164a-164n of each enterprise 160a-160n. The OT systems 163a-163n include hardware and software for detecting and/or causing a change, through the direct monitoring and/or control of industrial equipment (e.g., edge devices 161a-161n), assets, processes, and/or events. The IT applications 164a-164n includes network, storage, and computing resources for the generation, management, storage, and delivery of data throughout and between organizations.

The edge gateways 162a-162n include devices for facilitating communication between the edge devices 161a-161n and the cloud 105 via network 110. For example, the edge gateways 162a-162n include one or more communication interfaces for communicating with the edge devices 161a-161n and for communicating with the cloud 105 via network 110. According to various embodiments, the communication interfaces of the edge gateways 162a-162n include one or more cellular radios, Bluetooth, WiFi, near-field communication radios, Ethernet, or other appropriate communication devices for transmitting and receiving information. According to various embodiments, multiple communication interfaces are included in each gateway 162a-162n for providing multiple forms of communication between the edge devices 161a-161n, the gateways 162a-162n, and the cloud 105 via network 110. For example, in one or more embodiments, communication are achieved with the edge devices 161a-161n and/or the network 110 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

According to various embodiments, the edge gateways 162a-162n also include a processor and memory for storing and executing program instructions to facilitate data processing. For example, in one or more embodiments, the edge gateways 162a-162n are configured to receive data from the edge devices 161a-161n and process the data prior to sending the data to the cloud 105. Accordingly, in one or more embodiments, the edge gateways 162a-162n include one or more software modules or components for providing data processing services and/or other services or methods of the present disclosure. With reference to FIG. 2, each edge gateway 162a-162n includes edge services 165a-165n and edge connectors 166a-166n. According to various embodiments, the edge services 165a-165n include hardware and software components for processing the data from the edge devices 161a-161n. According to various embodiments, the edge connectors 166a-166n include hardware and software components for facilitating communication between the edge gateway 162a-162n and the cloud 105 via network 110, as detailed above. In some cases, any of edge devices 161a-n, edge connectors 166a-n, and edge gateways 162a-n have their functionality combined, omitted, or separated into any combination of devices. In other words, an edge device and its connector and gateway need not necessarily be discrete devices.

FIG. 2 illustrates a schematic block diagram of framework 200 of the IoT platform 125, according to the present disclosure. The IoT platform 125 of the present disclosure is a platform for enterprise performance management that uses real-time accurate models and visual analytics to deliver intelligent actionable recommendations and/or analytics for sustained peak performance of the enterprise 160a-160n. The IoT platform 125 is an extensible platform that is portable for deployment in any cloud or data center environment for providing an enterprise-wide, top to bottom view, displaying the status of processes, assets, people, and safety. Further, the IoT platform 125 supports end-to-end capability to execute digital twins against process data and to translate the output into actionable insights, using the framework 200, detailed further below.

As shown in FIG. 2, the framework 200 of the IoT platform 125 comprises a number of layers including, for example, an IoT layer 205, an enterprise integration layer 210, a data pipeline layer 215, a data insight layer 220, an application services layer 225, and an applications layer 230. The IoT platform 125 also includes a core services layer 235 and an extensible object model (EOM) 250 comprising one or more knowledge graphs 251. The layers 205-235 further include various software components that together form each layer 205-235. For example, in one or more embodiments, each layer 205-235 includes one or more of the modules 141, models 142, engines 143, databases 144, services 145, applications 146, or combinations thereof. In some embodiments, the layers 205-235 are combined to form fewer layers. In some embodiments, some of the layers 205-235 are separated into separate, more numerous layers. In some embodiments, some of the layers 205-235 are removed while others may be added. In certain embodiments, the framework 200 can be an on-premise framework where the edge devices 161a-161n are configured as part of a process control network and the IoT platform 125 is configured as an enterprise network.

The IoT platform 125 is a model-driven architecture. Thus, the extensible object model 250 communicates with each layer 205-230 to contextualize site data of the enterprise 160a-160n using an extensible graph-based object model (or "asset model"). In one or more embodiments, the extensible object model 250 is associated with knowledge graphs 251 where the equipment (e.g., edge devices 161a-161n) and processes of the enterprise 160a-160n are modeled. The knowledge graphs 251 of EOM 250 are configured to store the models in a central location. The knowledge graphs 251 define a collection of nodes and links that describe real-world connections that enable smart systems. As used herein, a knowledge graph 251: (i) describes real-world entities (e.g., edge devices 161a-161n) and their interrelations organized in a graphical interface; (ii) defines possible classes and relations of entities in a schema; (iii) enables interrelating arbitrary entities with each other; and (iv) covers various topical domains. In other words, the knowledge graphs 251 define large networks of entities (e.g., edge devices 161a-161n), semantic types of the entities, properties of the entities, and relationships between the entities. Thus, the knowledge graphs 251 describe a network of "things" that are relevant to a specific domain or to an enterprise or organization. Knowledge graphs 251 are not limited to abstract concepts and relations, but can also contain instances of objects, such as, for example, documents and datasets. In some embodiments, the knowledge graphs 251 include resource description framework (RDF) graphs. As used herein, a "RDF graph" is a graph data model that formally describes the semantics, or meaning, of information. The RDF graph also represents metadata (e.g., data that describes data). According to various embodiments, knowledge graphs 251 also include a semantic object model. The semantic object model is a subset of a knowledge graph 251 that defines semantics for the knowledge graph 251. For example, the semantic object model defines the schema for the knowledge graph 251.

As used herein, EOM 250 includes a collection of application programming interfaces (APIs) that enables seeded semantic object models to be extended. For example, the EOM 250 of the present disclosure enables a customer's knowledge graph 251 to be built subject to constraints expressed in the customer's semantic object model. Thus, the knowledge graphs 251 are generated by customers (e.g., enterprises or organizations) to create models of the edge devices 161a-161n of an enterprise 160a-160n, and the knowledge graphs 251 are input into the EOM 250 for visualizing the models (e.g., the nodes and links).

The models describe the assets (e.g., the nodes) of an enterprise (e.g., the edge devices 161a-161n) and describe the relationship of the assets with other components (e.g., the links). The models also describe the schema (e.g., describe what the data is), and therefore the models are self-validating. For example, in one or more embodiments, the model describes the type of sensors mounted on any given asset (e.g., edge device 161a-161n) and the type of data that is being sensed by each sensor. According to various embodiments, a KPI framework is used to bind properties of the assets in the extensible object model 250 to inputs of the KPI framework. Accordingly, the IoT platform 125 is an extensible, model-driven end-to-end stack including: two-way model sync and secure data exchange between the edge 115 and the cloud 105, metadata driven data processing (e.g., rules, calculations, and aggregations), and model driven visualizations and applications. As used herein, "extensible" refers to the ability to extend a data model to include new properties/columns/fields, new classes/tables, and new relations. Thus, the IoT platform 125 is extensible with regards to edge devices 161a-161n and the applications 146 that handle those devices 161a-161n. For example, when new edge devices 161a-161n are added to an enterprise 160a-160n system, the new devices 161a-161n will automatically appear in the IoT platform 125 so that the corresponding applications 146 understand and use the data from the new devices 161a-161n.

In some cases, asset templates are used to facilitate configuration of instances of edge devices 161a-161n in the model using common structures. An asset template defines the typical properties for the edge devices 161a-161n of a given enterprise 160a-160n for a certain type of device. For example, an asset template of a pump includes modeling the pump having inlet and outlet pressures, speed, flow, etc. The templates may also include hierarchical or derived types of edge devices 161a-161n to accommodate variations of a base type of device 161a-161n. For example, a reciprocating pump is a specialization of a base pump type and would include additional properties in the template. Instances of the edge device 161a-161n in the model are configured to match the actual, physical devices of the enterprise 160a-160n using the templates to define expected attributes of the device 161a-161n. Each attribute is configured either as a static value (e.g., capacity is 1000 BPH) or with a reference to a time series tag that provides the value. The knowledge graph 251 can automatically map the tag to the attribute based on naming conventions, parsing, and matching the tag and attribute descriptions and/or by comparing the behavior of the time series data with expected behavior. In one or more embodiments, each of the key attribute contributing to one or more metrics to drive a dashboard is marked with one or more metric tags such that a dashboard visualization is generated.

The modeling phase includes an onboarding process for syncing the models between the edge 115 and the cloud 105. For example, in one or more embodiments, the onboarding process includes a simple onboarding process, a complex onboarding process, and/or a standardized rollout process. The simple onboarding process includes the knowledge graph 251 receiving raw model data from the edge 115 and running context discovery algorithms to generate the model. The context discovery algorithms read the context of the edge naming conventions of the edge devices 161a-161n and determine what the naming conventions refer to. For example, in one or more embodiments, the knowledge graph 251 receives "TMP" during the modeling phase and determine that "TMP" relates to "temperature." The generated models are then published. The complex onboarding process includes the knowledge graph 251 receiving the raw model data, receiving point history data, and receiving site survey data. According to various embodiments, the knowledge graph 251 then uses these inputs to run the context discovery algorithms. According to various embodiments, the generated models are edited and then the models are published. The standardized rollout process includes manually defining standard models in the cloud 105 and pushing the models to the edge 115.

The IoT layer 205 includes one or more components for device management, data ingest, and/or command/control of the edge devices 161a-161n. The components of the IoT layer 205 enable data to be ingested into, or otherwise received at, the IoT platform 125 from a variety of sources. For example, in one or more embodiments, data is ingested from the edge devices 161a-161n through process historians or laboratory information management systems. The IoT layer 205 is in communication with the edge connectors 165a-165n installed on the edge gateways 162a-162n through network 110, and the edge connectors 165a-165n send the data securely to the IoT platform 205. In some embodiments, only authorized data is sent to the IoT platform 125, and the IoT platform 125 only accepts data from authorized edge gateways 162a-162n and/or edge devices 161a-161n. According to various embodiments, data is sent from the edge gateways 162a-162n to the IoT platform 125 via direct streaming and/or via batch delivery. Further, after any network or system outage, data transfer will resume once communication is re-established and any data missed during the outage will be backfilled from the source system or from a cache of the IoT platform 125. According to various embodiments, the IoT layer 205 also includes components for accessing time series, alarms and events, and transactional data via a variety of protocols.

The enterprise integration layer 210 includes one or more components for events/messaging, file upload, and/or REST/OData. The components of the enterprise integration layer 210 enable the IoT platform 125 to communicate with third party cloud applications 211, such as any application(s) operated by an enterprise in relation to its edge devices. For example, the enterprise integration layer 210 connects with enterprise databases, such as guest databases, customer databases, financial databases, patient databases, etc. The enterprise integration layer 210 provides a standard application programming interface (API) to third parties for accessing the IoT platform 125. The enterprise integration layer 210 also enables the IoT platform 125 to communicate with the OT systems 163a-163n and IT applications 164a-164n of the enterprise 160a-160n. Thus, the enterprise integration layer 210 enables the IoT platform 125 to receive data from the third-party applications 211 rather than, or in combination with, receiving the data from the edge devices 161a-161n directly. In certain embodiments, the enterprise integration layer 210 enables a scalable architecture to expand interfaces to multiple systems and/or system configurations. In certain embodiments, the enterprise integration layer 210 enables integration with an indoor navigation system related to the enterprise 160a-160n.

The data pipeline layer 215 includes one or more components for data cleansing/enriching, data transformation, data calculations/aggregations, and/or API for data streams. Accordingly, in one or more embodiments, the data pipeline layer 215 pre-processes and/or performs initial analytics on the received data. The data pipeline layer 215 executes advanced data cleansing routines including, for example, data correction, mass balance reconciliation, data conditioning, component balancing and simulation to ensure the desired information is used as a basis for further processing. The data pipeline layer 215 also provides advanced and fast computation. For example, cleansed data is run through enterprise-specific digital twins. According to various embodiments, the enterprise-specific digital twins include a reliability advisor containing process models to determine the current operation and the fault models to trigger any early detection and determine an appropriate resolution. According to various embodiments, the digital twins also include an optimization advisor that integrates real-time economic data with real-time process data, selects the right feed for a process, and determines optimal process conditions and product yields.

According to various embodiments, the data pipeline layer 215 employs models and templates to define calculations and analytics. Additionally or alternatively, according to various embodiments, the data pipeline layer 215 employs models and templates to define how the calculations and analytics relate to the assets (e.g., the edge devices 161a-161n). For example, in an embodiment, a pump template defines pump efficiency calculations such that every time a pump is configured, the standard efficiency calculation is automatically executed for the pump. The calculation model defines the various types of calculations, the type of engine that should run the calculations, the input and output parameters, the preprocessing requirement and prerequisites, the schedule, etc. According to various embodiments, the actual calculation or analytic logic is defined in the template or it may be referenced. Thus, according to various embodiments, the calculation model is employed to describe and control the execution of a variety of different process models. According to various embodiments, calculation templates are linked with the asset templates such that when an asset (e.g., edge device 161a-161n) instance is created, any associated calculation instances are also created with their input and output parameters linked to the appropriate attributes of the asset (e.g., edge device 161a-161n).

According to various embodiments, the IoT platform 125 supports a variety of different analytics models including, for example, first principles models, empirical models, engineered models, user-defined models, machine learning models, built-in functions, and/or any other types of analytics models. Fault models and predictive maintenance models will now be described by way of example, but any type of models may be applicable.

Fault models are used to compare current and predicted enterprise 160a-160n performance to identify issues or opportunities, and the potential causes or drivers of the issues or opportunities. The IoT platform 125 includes rich hierarchical symptom-fault models to identify abnormal conditions and their potential consequences. For example, in one or more embodiments, the IoT platform 125 drill downs from a high-level condition to understand the contributing factors, as well as determining the potential impact a lower level condition may have. There may be multiple fault models for a given enterprise 160a-160n looking at different aspects such as process, equipment, control, and/or operations. According to various embodiments, each fault model identifies issues and opportunities in their domain, and can also look at the same core problem from a different perspective. According to various embodiments, an overall fault model is layered on top to synthesize the different perspectives from each fault model into an overall assessment of the situation and point to the true root cause.

According to various embodiments, when a fault or opportunity is identified, the IoT platform 125 provides recommendations about an optimal corrective action to take. Initially, the recommendations are based on expert knowledge that has been preprogrammed into the system by process and equipment experts. A recommendation services module presents this information in a consistent way regardless of source, and supports workflows to track, close out, and document the recommendation follow-up. According to various embodiments, the recommendation follow-up is employed to improve the overall knowledge of the system over time as existing recommendations are validated (or not) or new cause and effect relationships are learned by users and/or analytics.

According to various embodiments, the models are used to accurately predict what will occur before it occurs and interpret the status of the installed base. Thus, the IoT platform 125 enables operators to quickly initiate maintenance measures when irregularities occur. According to various embodiments, the digital twin architecture of the IoT platform 125 employs a variety of modeling techniques. According to various embodiments, the modeling techniques include, for example, rigorous models, fault detection and diagnostics (FDD), descriptive models, predictive maintenance, prescriptive maintenance, process optimization, and/or any other modeling technique.

According to various embodiments, the rigorous models are converted from process design simulation. In this manner, process design is integrated with feed conditions and production requirement. Process changes and technology improvement provide opportunities that enable more effective maintenance schedule and deployment of resources in the context of production needs. The fault detection and diagnostics include generalized rule sets that are specified based on industry experience and domain knowledge and can be easily incorporated and used working together with equipment models. According to various embodiments, the descriptive models identify a problem and the predictive models determines possible damage levels and maintenance options. According to various embodiments, the descriptive models include models for defining the operating windows for the edge devices 161a-161n.

Predictive maintenance includes predictive analytics models developed based on rigorous models and statistic models, such as, for example, principal component analysis (PCA) and partial least square (PLS). According to various embodiments, machine learning methods are applied to train models for fault prediction. According to various embodiments, predictive maintenance leverages FDD-based algorithms to continuously monitor individual control and equipment performance. Predictive modeling is then applied to a selected condition indicator that deteriorates in time. Prescriptive maintenance includes determining an optimal maintenance option and when it should be performed based on actual conditions rather than time-based maintenance schedule. According to various embodiments, prescriptive analysis selects the right solution based on the company's capital, operational, and/or other requirements. Process optimization is determining optimal conditions via adjusting set-points and schedules. The optimized set-points and schedules can be communicated directly to the underlying controllers, which enables automated closing of the loop from analytics to control.

The data insight layer 220 includes one or more components for time series databases (TDSB), relational/document databases, data lakes, blob, files, images, and videos, and/or an API for data query. According to various embodiments, when raw data is received at the IoT platform 125, the raw data is stored as time series tags or events in warm storage (e.g., in a TSDB) to support interactive queries and to cold storage for archive purposes. According to various embodiments, data is sent to the data lakes for offline analytics development. According to various embodiments, the data pipeline layer 215 accesses the data stored in the databases of the data insight layer 220 to perform analytics, as detailed above.

The application services layer 225 includes one or more components for rules engines, workflow/notifications, KPI framework, insights (e.g., actionable insights), decisions, recommendations, machine learning, and/or an API for application services. The application services layer 225 enables building of applications 146a-d. The applications layer 230 includes one or more applications 146a-d of the IoT platform 125. For example, according to various embodiments, the applications 146a-d includes a buildings application 146a, a plants application 146b, an aero application 146c, and other enterprise applications 146d. According to various embodiments, the applications 146 includes general applications 146 for portfolio management, asset management, autonomous control, and/or any other custom applications. According to various embodiments, portfolio management includes the KPI framework and a flexible user interface (UI) builder. According to various embodiments, asset management includes asset performance and asset health. According to various embodiments, autonomous control includes energy optimization and/or predictive maintenance. As detailed above, according to various embodiments, the general applications 146 is extensible such that each application 146 is configurable for the different types of enterprises 160a-160n (e.g., buildings application 146a, plants application 146b, aero application 146c, and other enterprise applications 146d).

The applications layer 230 also enables visualization of performance of the enterprise 160a-160n. For example, dashboards provide a high-level overview with drill downs to support deeper investigations. Recommendation summaries give users prioritized actions to address current or potential issues and opportunities. Data analysis tools support ad hoc data exploration to assist in troubleshooting and process improvement.

The core services layer 235 includes one or more services of the IoT platform 125. According to various embodiments, the core services 235 include data visualization, data analytics tools, security, scaling, and monitoring. According to various embodiments, the core services 235 also include services for tenant provisioning, single login/common portal, self-service admin, UI library/UI tiles, identity/access/entitlements, logging/monitoring, usage metering, API gateway/dev portal, and the IoT platform 125 streams.

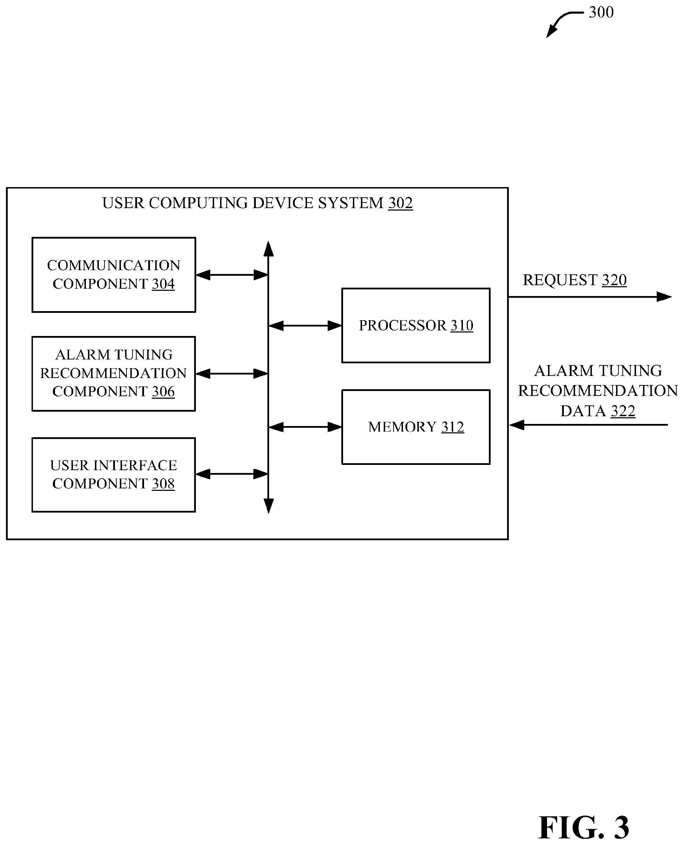

FIG. 3 illustrates a system 300 that provides an exemplary environment according to one or more described features of one or more embodiments of the disclosure. According to an embodiment, the system 300 includes a user computing device system 302 to provide a practical application of alarm management for one or more industrial processes and/or one or more industrial assets. In various embodiments, the user computing device system 302 provides a practical application of data analytics technology and/or digital transformation technology to facilitate configuration of an interactive user interface. In one or more embodiments, the user computing device system 302 provides a practical application of rendering alarm tuning recommendations related to user interface technology to provide optimization related to one or more alarms for one or more industrial processes and/or one or more industrial assets. In one or more embodiments, the user computing device system 302 employs event data and/or alarm data that is aggregated from one or more assets and/or one or more data sources associated with an enterprise system (e.g., an industrial system, a building system, or another type of enterprise system) to provide real-time insights for alarm recommendations.

In an embodiment, the user computing device system 302 facilitates interaction with an alarm management platform and/or an alarm performance optimizer platform associated with a server system (e.g., a server device), one or more data sources, and/or one or more assets. In one or more embodiments, the user computing device system 302 is a device with one or more processors and a memory. In one or more embodiments, the user computing device system 302 interacts with a computer system from the computer systems 120 to facilitate providing an interactive user interface associated with alarm tuning recommendations. In various embodiments, the interactive user interface is configured as a dashboard visualization associated with a portfolio of assets and/or related industrial processes. In one or more embodiments, the user computing device system 302 interacts with a computer system from the computer systems 120 via the network 110. The user computing device system 302 is also related to one or more technologies, such as, for example, enterprise technologies, industrial technologies, connected building technologies, Internet of Things (IoT) technologies, user interface technologies, data analytics technologies, digital transformation technologies, cloud computing technologies, cloud database technologies, server technologies, network technologies, private enterprise network technologies, wireless communication technologies, machine learning technologies, artificial intelligence technologies, digital processing technologies, electronic device technologies, computer technologies, supply chain analytics technologies, aircraft technologies, industrial technologies, cybersecurity technologies, navigation technologies, asset visualization technologies, oil and gas technologies, petrochemical technologies, refinery technologies, process plant technologies, procurement technologies, and/or one or more other technologies.

Moreover, the user computing device system 302 provides an improvement to one or more technologies such as enterprise technologies, industrial technologies, connected building technologies, IoT technologies, user interface technologies, data analytics technologies, digital transformation technologies, cloud computing technologies, cloud database technologies, server technologies, network technologies, private enterprise network technologies, wireless communication technologies, machine learning technologies, artificial intelligence technologies, digital processing technologies, electronic device technologies, computer technologies, supply chain analytics technologies, aircraft technologies, industrial technologies, cybersecurity technologies, navigation technologies, asset visualization technologies, oil and gas technologies, petrochemical technologies, refinery technologies, process plant technologies, procurement technologies, and/or one or more other technologies. In an implementation, the user computing device system 302 improves performance of a user computing device. For example, in one or more embodiments, the user computing device system 302 improves processing efficiency of a user computing device, reduces power consumption of a computing device, improves quality of data provided by a user computing device, etc. In various embodiments, the user computing device system 302 improves performance of a user computing device by optimizing content rendered via an interactive user interface, by reducing a number of user interactions with respect to an interactive user interface, and/or by reducing a number of computing resources required to render content via an interactive user interface.

The user computing device system 302 includes a communication component 304, an alarm tuning recommendation component 306 and/or a user interface component 308. Additionally, in one or more embodiments, the user computing device system 302 includes a processor 310 and/or a memory 312. In certain embodiments, one or more aspects of the user computing device system 302 (and/or other systems, apparatuses and/or processes disclosed herein) constitute executable instructions embodied within a computer-readable storage medium (e.g., the memory 312). For instance, in an embodiment, the memory 312 stores computer executable component and/or executable instructions (e.g., program instructions). Furthermore, the processor 310 facilitates execution of the computer executable components and/or the executable instructions (e.g., the program instructions). In an example embodiment, the processor 310 is configured to execute instructions stored in the memory 312 or otherwise accessible to the processor 310.

The processor 310 is a hardware entity (e.g., physically embodied in circuitry) capable of performing operations according to one or more embodiments of the disclosure. Alternatively, in an embodiment where the processor 310 is embodied as an executor of software instructions, the software instructions configure the processor 310 to perform one or more algorithms and/or operations described herein in response to the software instructions being executed. In an embodiment, the processor 310 is a single core processor, a multi-core processor, multiple processors internal to the user computing device system 302, a remote processor (e.g., a processor implemented on a server), and/or a virtual machine. In certain embodiments, the processor 310 is in communication with the memory 312, the communication component 304, the alarm tuning recommendation component 306 and/or the user interface component 308 via a bus to, for example, facilitate transmission of data among the processor 310, the memory 312, the communication component 304, the alarm tuning recommendation component 306 and/or the user interface component 308. The processor 310 may be embodied in a number of different ways and, in certain embodiments, includes one or more processing devices configured to perform independently. Additionally or alternatively, in one or more embodiments, the processor 310 includes one or more processors configured in tandem via a bus to enable independent execution of instructions, pipelining of data, and/or multi-thread execution of instructions.

The memory 312 is non-transitory and includes, for example, one or more volatile memories and/or one or more non-volatile memories. In other words, in one or more embodiments, the memory 312 is an electronic storage device (e.g., a computer-readable storage medium). The memory 312 is configured to store information, data, content, one or more applications, one or more instructions, or the like, to enable the user computing device system 302 to carry out various functions in accordance with one or more embodiments disclosed herein. As used herein in this disclosure, the term "component," "system," and the like, is a computer-related entity. For instance, "a component," "a system," and the like disclosed herein is either hardware, software, or a combination of hardware and software. As an example, a component is, but is not limited to, a process executed on a processor, a processor, circuitry, an executable component, a thread of instructions, a program, and/or a computer entity.

**In** one or more embodiments, the communication component 304 is configured to generate a request 320. The request 320 is a request to obtain alarm tuning recommendation data for one or more alarm configuration parameters related to one or more industrial processes and/or one or more industrial assets in an industrial environment. In various embodiments, the communication component 304 generates the request 320 in response to an action performed with respect to a first user interface configuration for an interactive user interface. The action can be, for example, initiating execution of an application (e.g., a mobile application) via a user computing device that presents the interactive user interface, altering an interactive graphical element via the interactive user interface, or another type of action with respect to the interactive user interface. Additionally or alternatively, in one or more embodiments, the communication component 304 generates the request 320 in response to execution of a user authentication process via a user computing device. For example, in an embodiment, the user authentication process is associated with password entry, facial recognition, biometric recognition, security key exchange, and/or another security technique associated with a user computing device.

In various embodiments, the interactive user interface is a dashboard visualization related to alarm management for the one or more industrial processes and/or the one or more industrial assets. In various embodiments, the one or more industrial processes are related to the edge devices 161a-161n (e.g., the edge devices 161a-161n included in a portfolio of assets). In one or more embodiments, the edge devices 161a-161n are associated with the portfolio of assets. For instance, in one or more embodiments, the edge devices 161a-161n include one or more assets in a portfolio of assets. The edge devices 161a-161n include, in one or more embodiments, one or more databases, one or more assets (e.g., one or more building assets, one or more industrial assets, etc.), one or more IoT devices (e.g., one or more industrial IoT devices), one or more connected building assets, one or more sensors, one or more actuators, one or more processors, one or more computers, one or more valves, one or more pumps (e.g., one or more centrifugal pumps, etc.), one or more motors, one or more compressors, one or more turbines, one or more ducts, one or more heaters, one or more chillers, one or more coolers, one or more boilers, one or more furnaces, one or more heat exchangers, one or more fans, one or more blowers, one or more conveyor belts, one or more vehicle components, one or more cameras, one or more displays, one or more security components, one or more air handler units, one or more HVAC components, industrial equipment, factory equipment, and/or one or more other devices that are connected to the network 110 for collecting, sending, and/or receiving information. In one or more embodiments, the edge device 161a-161n include, or is otherwise in communication with, one or more controllers for selectively controlling a respective edge device 161a-161n and/or for sending/receiving information between the edge devices 161a-161n and an alarm performance optimizer system via the network 110. In one or more embodiments, the edge devices 161a-161n are associated with an industrial environment (e.g., a plant, etc.). Additionally or alternatively, in one or more embodiments, the edge devices 161a-161n are associated with components of the edge 115 such as, for example, one or more enterprises 160a-160n.

In one or more embodiments, the request 320 includes one or more alarm identifiers/conditions related to the one or more industrial processes. For example, the one or more alarm identifiers/conditions can identify and/or tag one or more alarms for the one or more industrial processes. Additionally or alternatively, in one or more embodiments, the request 320 includes one or more asset descriptors that describe the one or more industrial assets. For instance, in one or more embodiments, the request 320 includes one or more asset descriptors that describe the edge devices 161a-161n. An asset descriptor includes, for example, an asset name, an asset identifier, an asset level and/or other information associated with an asset. Additionally or alternatively, in one or more embodiments, the request 320 includes one or more user identifiers describing a user role for a user associated with access of the interactive user interface. A user identifier includes, for example, an identifier for a user role name (e.g., a manager, an executive, a maintenance engineer, a process engineer, etc.).

In certain embodiments, the industrial environment is associated with one or more asset zones (e.g., one or more zones in a building, etc.) that respectively include one or more assets. In certain embodiments, the industrial environment is managed by an industrial control system that controls the one or more industrial processes and/or the one or more industrial assets. In certain embodiments, the industrial environment is managed by a SCADA system. A SCADA system is a control system that includes one or more assets configured for networked communications and/or real-time control logic. For example, a SCADA system is configured for data acquisition, networked data communication, data presentation, monitoring, and/or control of one or more assets. In certain embodiments, a SCADA system includes one or more controllers (e.g., one or more programmable logic controllers, one or more remote terminal units, one or more proportional integral derivative controllers, etc.) to facilitate control of the one or more assets. In certain embodiments, one or more events of a SCADA system stored in one or more log files.

In an embodiment, the communication component 304 is configured to transmit the request 320. In one or more embodiments, the communication component 304 transmits the request 320 to a server system. For example, in one or more embodiments, the communication component 304 transmits the request 320 to an alarm performance optimizer (APO) system (e.g., APO system 502). In one or more embodiments, the communication component 304 transmits the request 320 to a computer system from the computer systems 120 to facilitate altering configuration of the interactive user interface. In one or more embodiments, the communication component 304 transmits the request 320 via the network 110.

In one or more embodiments, in response to the request 320, the communication component 304 and/or the alarm tuning recommendation component 306 is configured to receive alarm tuning recommendation data 322. In one or more embodiments, the alarm tuning recommendation component 306 receives the alarm tuning recommendation data 322 from the server system. For example, in one or more embodiments, the alarm tuning recommendation component 306 receives the alarm tuning recommendation data 322 from an APO system (e.g., APO system 502). In one or more embodiments, the alarm tuning recommendation component 306 receives the alarm tuning recommendation data 322 from a computer system from the computer systems 120 to facilitate altering configuration of the interactive user interface based on the alarm tuning recommendation data 322. In one or more embodiments, the communication component 304 and/or the alarm tuning recommendation component 306 receives the alarm tuning recommendation data 322 via the network 110. In certain embodiments, the communication component 304 and/or the alarm tuning recommendation component 306 incorporates encryption capabilities to facilitate encryption and/or decryption of one or more portions of the alarm tuning recommendation data 322. In one or more embodiments, the network 110 is a Wi-Fi network, a Near Field Communications (NFC) network, a Worldwide Interoperability for Microwave Access (WiMAX) network, a personal area network (PAN), a short-range wireless network (e.g., a Bluetooth^{®} network), an infrared wireless (e.g., IrDA) network, an ultra-wideband (UWB) network, an induction wireless transmission network, and/or another type of network.

In one or more embodiments, the alarm tuning recommendation data 322 is configured based on the one or more alarm identifiers, the one or more asset descriptors, and/or the one or more user identifiers. Additionally, in one or more embodiments, the alarm tuning recommendation data 322 is configured based on alarm insight data associated with respective alarm count reduction predictions for the one or more alarm conditions. For example, the alarm insight data can include labels, classifications, insights, inferences, trends, patterns, relationships, machine learning data and/or other attributes for alarm data associated with the edge devices 161a-161n.

In one or more embodiments, the communication component 304 and/or the alarm tuning recommendation component 306 is configured to interface with the server system (e.g., an APO system) to facilitate receiving the alarm tuning recommendation data 322. In certain embodiments, the communication component 304 and/or the alarm tuning recommendation component 306 interfaces with one or more machine learning models managed by the server system (e.g., managed by the APO system). In one or more embodiments, the one or more machine learning models are configured to generate at least a portion of the alarm insight data associated with the alarm tuning recommendation data 322. For example, in one or more embodiments, the one or more machine learning models are configured to generate at least a portion of the respective alarm count reduction predictions associated with the alarm insight data. In one or more embodiments, the one or more machine learning models determine the alarm insight data with respect to aggregated alarm events, aggregated alarm configurations and/or real-time data associated with the edge devices 161a-161n. For example, in certain embodiments, the one or more machine learning models identify, classify and/or predict one or more tuned parameters for one or more alarms based on aggregated alarm events, aggregated alarm configurations and/or real-time data associated with the edge devices 161a-161n. In one or more embodiments, at least one machine learning model from the one or more machine learning models is configured as a deep neural network trained for alarm insights such as predicted tuned parameters and/or alarm reduction predictions. In one or more embodiments, at least one machine learning model from the one or more machine learning models employs fuzzy logic, a Bayesian network, a Markov logic network and/or another type of machine learning technique to determine at least a portion of the alarm insight data associated with the alarm tuning recommendation data 322. In certain embodiments, the one or more machine learning models determine at least a portion of the alarm tuning recommendation data 322 based on respective annotations and/or labels associated with respective industrial processes and/or assets. For example, in certain embodiments, the one or more machine learning models determine at least a portion of the alarm tuning recommendation data 322 based on respective annotations and/or labels for asset properties, asset locations, asset sites, asset details, asset activities, asset functionalities, asset configurations, asset components, asset services, asset priorities and/or other asset information for respective assets and/or industrial processes. In certain embodiments, the communication component 304 and/or the alarm tuning recommendation component 306 is configured to interface with the server system (e.g., an APO system) to generate at least a portion of the alarm tuning recommendation data 322 based on an alarm philosophy rule set. For example, at least a portion of the alarm tuning recommendation data 322 can be generated based on an alarm philosophy rule set. The alarm philosophy rule set can establish one or more rules and/or conditions for an alarm system process such as, for example, when an alarm should be triggered. For instance, the alarm philosophy rule set can establish one or more rules and/or conditions for one or more variables of an industrial process such as, for example, fluid pressure, flow, level, temperature, etc.

In an embodiment, the alarm tuning recommendation data 322 comprises prioritized actions for the one or more alarm configuration parameters, for the one or more industrial processes, the one or more industrial assets, one or more alarms related to the one or more alarm configuration parameters, and/or one or more alarm tags related to the one or more alarm configuration parameters. In one or more embodiments, the prioritized actions indicate which alarm, alarm tag, industrial process, and/or industrial asset should be tuned first. For example, in an embodiment, the prioritized actions indicate a first alarm from a set of alarms that should be tuned first, a second alarm from the set of alarms that should be tuned second, a third alarm from the set of alarms that should be tuned third, etc. In one or more embodiments, the prioritized actions are configured as a list of prioritized actions based on impact to the one or more industrial processes and/or the one or more industrial assets. For instance, in one or more embodiments, the prioritized actions are ranked based on impact of respective prioritized actions with respect to the one or more industrial processes and/or the one or more industrial assets. In one or more embodiments, the prioritized actions are grouped based on impact to the one or more industrial processes and/or the one or more industrial assets.

The user interface component 308 is configured to render an interactive user interface via a display of a user computing device. In one or more embodiments, the interactive user interface is configured as a dashboard visualization rendered via a display of a user computing device. In one or more embodiments, the interactive user interface is associated with the edge devices 161a-161n (e.g., the edge devices 161a-161n included in a portfolio of assets). In one or more embodiments, the interactive user interface is configured to provide prioritized actions for alarm tunings as respective interactive display elements via the interactive user interface. An interactive display element is a portion of the interactive user interface (e.g., a user-interactive electronic interface portion) that provides interaction with respect to a user of the user computing device. For example, in one or more embodiments, an interactive display element is an interactive display element associated with a set of pixels that allows a user to provide feedback and/or to perform one or more actions with respect to the interactive user interface. In an embodiment, in response to interaction with an interactive display element, the interactive user interface is dynamically altered to display one or more altered portions of the interactive user interface associated with different visual data and/or different interactive display elements.

Additionally, in one or more embodiments, the interactive user interface is configured to facilitate execution and/or initiation of one or more actions via the dashboard visualization based on the alarm tuning recommendation data 322. In an embodiment, an action is executed and/or initiated via an interactive display element of the dashboard visualization. In certain embodiments, the interactive user interface presents one or more notifications associated with the prioritized actions related to the alarm tuning recommendation data 322. In certain embodiments, the alarm tuning recommendation data 322 includes optimal alarm configuration parameters for the one or more industrial processes. In certain embodiments, an interactive display element of the interactive user interface provides execution and/or initiation of one or more corrective action to take for the alarms. In certain embodiments, an action related to an interactive display element of the interactive user interface includes an action associated with the application services layer 225, the applications layer 230, and/or the core services layer 235.

In one or more embodiments, the alarm tuning recommendation component 306 interfaces with the user interface component 308 to alter the first user interface configuration for the interactive user interface based on the alarm tuning recommendation data 322. For example, in one or more embodiments, the alarm tuning recommendation component 306 alters the first user interface configuration for the interactive user interface based on the alarm tuning recommendation data 322 to provide a second user interface configuration for the interactive user interface. Additionally, the user interface component 308 can render the second user interface configuration for the interactive user interface via the display of the user computing device. In one or more embodiments, the second user interface configuration includes respective interactive display elements related to the one or more alarm identifiers. Additionally, in one or more embodiments, the user interface component 308 renders the respective interactive display elements for the second user interface configuration via the interactive user interface based on the alarm tuning recommendation data 322.

In certain embodiments, the alarm tuning recommendation data 322 includes predicted impact data associated with respective impact classifications for the one or more industrial processes by tuning respective alarm configuration parameters for the one or more industrial processes. Additionally, the user interface component 308 arranges the respective interactive display elements related to the one or more alarm identifiers based on the predicted impact data.

In certain embodiments, the alarm tuning recommendation data 322 includes predicted optimization data associated with a degree of reduction (e.g., an estimated degree of reduction) in a number of alarms based on tuning of respective alarm configuration parameters for the one or more industrial processes. Additionally, the user interface component 308 arranges the respective interactive display elements related to the one or more alarm identifiers based on the predicted optimization data.

In certain embodiments, the alarm tuning recommendation data 322 includes predicted industrial operations metrics data associated with a predicted performance of the one or more industrial processes based on tuning of respective configuration parameters for the one or more industrial processes. Additionally, the user interface component 308 arranges the respective interactive display elements related to the one or more alarm identifiers based on the predicted industrial operations metrics data.

In certain embodiments, the alarm tuning recommendation data 322 includes predicted industrial operations metrics data associated with a predicted performance of the one or more industrial processes based on tuning of respective alarm configuration parameters for the one or more industrial processes. Additionally, the user interface component 308 generates an interactive matrix display element including a matrix arrangement of the respective interactive display elements related to the one or more alarm identifiers based on the predicted industrial operations metrics data.

In certain embodiments, the user interface component 308 generates a navigational interactive display element including a real-time status of updates to the one or more alarm identifiers. Additionally, in response to an interaction with respect to the navigational interactive display element, the user interface component 308 alters the second user interface configuration for the interactive user interface to provide a third user interface configuration for the interactive user interface. The third user interface configuration can provide an ability to alter respective alarm configuration parameters for the one or more industrial processes.

In certain embodiments, the user interface component 308 receives an acceptance indicator for an alarm tuning recommendation associated with the alarm tuning recommendation data 322 via the interactive user interface. For example, the acceptance indicator can be generated based on input data provided via the interactive user interface that indicates user acceptance of the alarm tuning recommendation. Additionally or alternatively, the user interface component 308 transmits the acceptance indicator to the server system (e.g., an APO system) and/or one or more controllers associated with the one or more industrial processes. In certain embodiments, the user interface component 308 receives a rejection indicator for an alarm tuning recommendation associated with the alarm tuning recommendation data 322. For example, the rejection indicator can be generated based on input data provided via the interactive user interface that indicates user rejection of the alarm tuning recommendation. Additionally, the alarm tuning recommendation component 306 can provide updated training data associated with the rejection indicator to one or more machine learning models configured to provide the alarm insight data. The updated training data can include updated classifications, labels, weights, hyperparameters, and/or other data for providing a new training stage for the one or more machine learning models. In various embodiments, the one or more machine learning models can be configured learn from the rejection indicator to improve future alarm tuning recommendations. In certain embodiments, the user interface component 308 transmits one or more altered tuning values associated with the alarm tuning recommendation data 322 to one or more controllers related to the one or more industrial processes. For example, the one or more altered tuning values can be a respective optimized value for the one or more industrial processes. In one or more embodiments, one or more control signals provided by the one or more controllers (e.g., one or more control signals for one or more industrial assets associated with the one or more industrial processes) are modified based on the one or more altered tuning values. In certain embodiments, the user interface component 308 provides remote control of one or more controllers related to the one or more industrial processes based on the alarm tuning recommendation data 322.

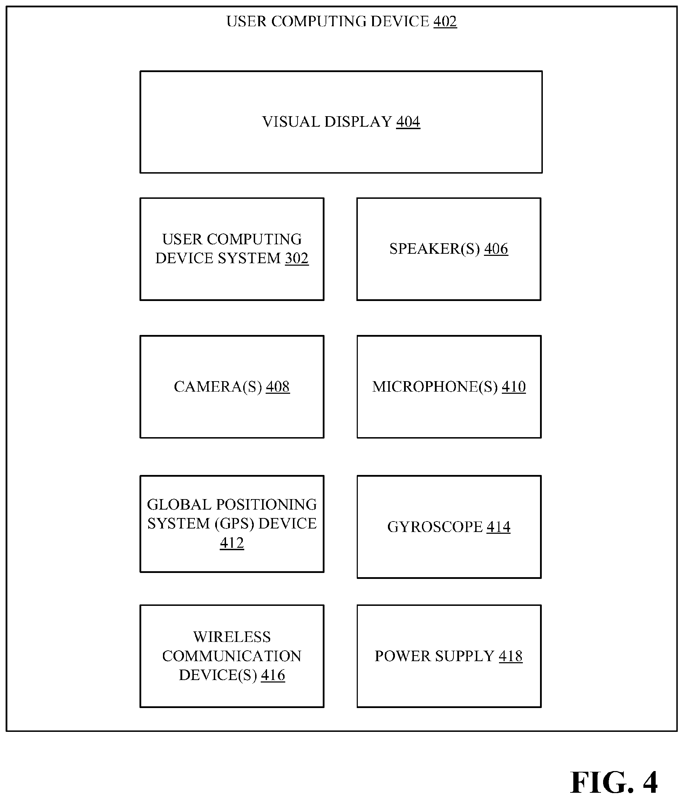

FIG. 4 illustrates a system 400 according to one or more embodiments of the disclosure. The system 400 includes a user computing device 402. The user computing device 402 is a mobile computing device, a smartphone, a tablet computer, a mobile computer, a desktop computer, a laptop computer, a workstation computer, a wearable device, a virtual reality device, an augmented reality device, or another type of computing device. In one or more embodiments, the user computing device 402 employs mobile computing, augmented reality, cloud-based computing, IoT technology and/or one or more other technologies to provide performance data, video, audio, text, graphs, charts, real-time data, graphical data, one or more communications, one or more messages, one or more notifications, and/or other media data associated with the dashboard visualization. The user computing device 402 includes mechanical components, electrical components, hardware components and/or software components to facilitate rendering of the dashboard visualization. The user computing device 402 includes the user computing device system 302. In the embodiment shown in FIG. 4, the user computing device 402 also includes a visual display 404, one or more speakers 406, one or more cameras 408, one or more microphones 410, a global positioning system (GPS) device 412, a gyroscope 414, one or more wireless communication devices 416, and/or a power supply 418.

In an embodiment, the visual display 404 is a display that facilitates presentation of and/or interaction with the dashboard visualization associated with the alarm tuning recommendation data 322. In one or more embodiments, the user computing device 402 displays the interactive user interface. In one or more embodiments, the visual display 404 is a visual display that renders data associated with the interactive user interface. In one or more embodiments, the visual display 404 displays respective interactive display elements associated with the alarm tuning recommendation data 322. In one or more embodiments, the visual display 404 provides the interactive user interface that is configured to allow a user associated with the user computing device 402 to interact with respective user interface configurations of the interactive user interface. Additionally, in one or more embodiments, the visual display 404 provides the interactive user interface that is configured to allow a user associated with the user computing device 402 to control the one or more portions of one or more industrial processes and/or one or more industrial assets (e.g., one or more portions of the edge devices 161a-161n). In one or more embodiments, the interactive user interface is configured based on user profile data and/or user privileges. In certain embodiments, user specific requirements associated with the interactive user interface is configured via a backend system (e.g., an APO system). In one or more embodiments, the interactive user interface is configured based on hardware and/or software specifications of the user computing device.

The one or more speakers 406 include one or more integrated speakers that project audio. The one or more cameras 408 include one or more cameras that employ autofocus and/or image stabilization for photo capture and/or real-time video. The one or more microphones 410 include one or more digital microphones that employ active noise cancellation to capture audio data. The GPS device 412 provides a geographic location for the user computing device 402. The gyroscope 414 provides an orientation for the user computing device 402. The one or more wireless communication devices 416 includes one or more hardware components to provide wireless communication via one or more wireless networking technologies and/or one or more short-wavelength wireless technologies. The power supply 418 is, for example, a power supply and/or a rechargeable battery that provides power to the visual display 404, the one or more speakers 406, the one or more cameras 408, the one or more microphones 410, the GPS device 412, the gyroscope 414, and/or the one or more wireless communication devices 416. In certain embodiments, the alarm tuning recommendation data 322 associated with the prioritized actions is presented via the visual display 404 and/or the one or more speakers 406. In certain embodiments, the visual display 404, the one or more cameras 408, the one or more microphones 410, and/or the GPS device 412 facilitate the user authentication process. In certain embodiments, one or more portions of the one or more wireless communication devices 416 are configured via the communication component 304 to facilitate transmission of the request 320.

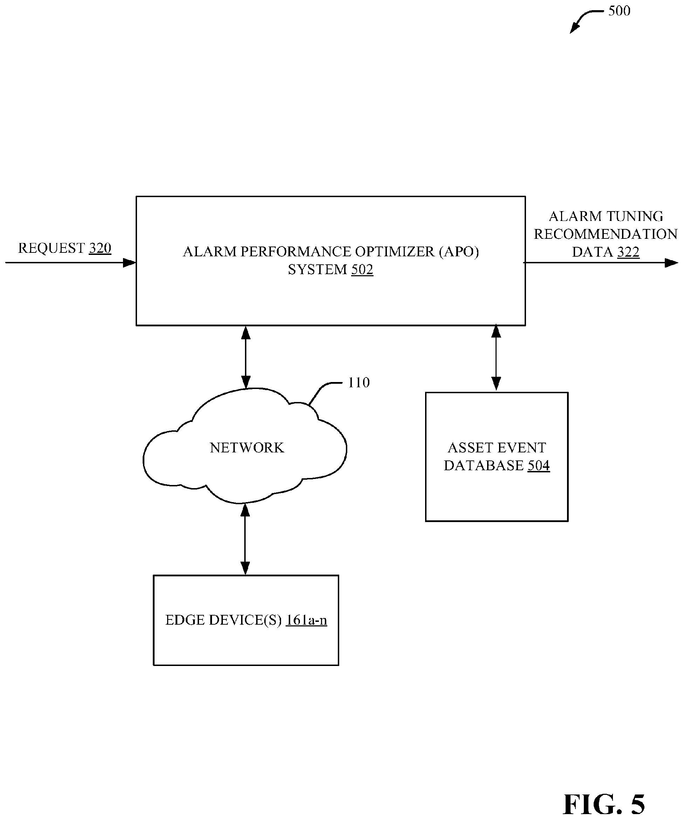

FIG. 5 illustrates a system 500 that provides another exemplary environment according to one or more described features of one or more embodiments of the disclosure. According to an embodiment, the system 500 includes an APO system 502. The APO system 502 is associated with one or more application products such as an alarm management platform, an alarm performance optimizer platform, an asset management platform, an asset performance platform, a global operations platform, a site operations platform, an industrial asset platform, an industrial process platform, a digital worker platform, an energy and sustainability platform, a healthy buildings platform, an energy optimization platform, a predictive maintenance platform, a centralized control platform, and/or another type of asset platform. In one or more embodiments, the APO system 502 receives the request 320 from the user computing device system 302. In certain embodiments, the APO system 502 receives the request 320 via the network 110. Additionally, in one or more embodiments, the APO system 502 transmits the alarm tuning recommendation data 322 to the user computing device system 302. In certain embodiments, the APO system 502 transmits the alarm tuning recommendation data 322 via the network 110.

In an embodiment, the APO system 502 receives data from the edge devices 161a-161n. In one or more embodiments, at least a portion of the data from the edge devices 161a-161n is included in the alarm tuning recommendation data 322. In one or more embodiments, the edge devices 161a-161n are associated with a portfolio of assets. For instance, in one or more embodiments, the edge devices 161a-161n include one or more assets in a portfolio of assets. The edge devices 161a-161n include, in one or more embodiments, one or more databases, one or more assets (e.g., one or more industrial assets, one or more building assets, etc.), one or more IoT devices (e.g., one or more industrial IoT devices), one or more connected building assets, one or more sensors, one or more actuators, one or more processors, one or more computers, one or more valves, one or more pumps (e.g., one or more centrifugal pumps, etc.), one or more motors, one or more compressors, one or more turbines, one or more ducts, one or more heaters, one or more chillers, one or more coolers, one or more boilers, one or more furnaces, one or more heat exchangers, one or more fans, one or more blowers, one or more conveyor belts, one or more vehicle components, one or more cameras, one or more displays, one or more security components, one or more air handler units, one or more HVAC components, industrial equipment, factory equipment, and/or one or more other devices that are connected to the network 110 for collecting, sending, and/or receiving information. In one or more embodiments, the edge device 161a-161n include, or is otherwise in communication with, one or more controllers for selectively controlling a respective edge device 161a-161n and/or for sending/receiving information between the edge devices 161a-161n and the APO system 502 via the network 110. The data associated with the edge devices 161a-161n includes, for example, alarm data (e.g., alarm configuration data, alarm event data, etc.), sensor data, real-time data, live property value data, event data, process data, operational data, fault data, asset data, location data, and/or other data associated with the edge devices 161a-161n. Additionally or alternatively, the data associated with the edge devices 161a-161n includes historical data, historical alarm data (e.g., historical alarm configuration data, historical alarm event data, etc.), historical sensor data, historical property value data, historical event data, historical process data, historical operational data, historical fault data, historical asset data, and/or other historical data associated with the edge devices 161a-161n.

In certain embodiments, at least one edge device from the edge devices 161a-161n incorporates encryption capabilities to facilitate encryption of one or more portions of the asset data 314. Additionally, in one or more embodiments, the APO system 502 receives the data associated with the edge devices 161a-161n via the network 110. In one or more embodiments, the network 110 is a Wi-Fi network, an NFC network, a WiMAX network, a PAN, a short-range wireless network (e.g., a Bluetooth^{®} network), an infrared wireless (e.g., IrDA) network, a UWB network, an induction wireless transmission network, and/or another type of network. In one or more embodiments, the edge devices 161a-161n are associated with an industrial environment (e.g., a plant, etc.). Additionally or alternatively, in one or more embodiments, the edge devices 161a-161n are associated with components of the edge 115 such as, for example, one or more enterprises 160a-160n.

In one or more embodiments, the APO system 502 aggregates the data associated with the edge devices 161a-161n from the edge devices 161a-161n. For instance, in one or more embodiments, the APO system 502 aggregates the data associated with the edge devices 161a-161n into an asset event database 504. The asset event database 504 is a cache memory (e.g., a database structure) that dynamically stores the data associated with the edge devices 161a-161n based on interval of time and/or asset hierarchy level. For instance, in one or more embodiments, the asset event database 504 stores the data associated with the edge devices 161a-161n for one or more intervals of time (e.g., 1 minute to 12 minutes, 1 hour to 24 hours, 1 day to 31 days, 1 month to 12 months, etc.) and/or for one or more asset hierarchy levels (e.g., asset level, asset zone, building level, building zone, plant level, plant zone, industrial site level, etc.). In a non-limiting embodiment, the asset event database 504 stores the data associated with the edge devices 161a-161n for a first interval of time (e.g., 1 hour to 24 hours minutes) for a first asset (e.g., a first asset hierarchy level), for a second interval of time (e.g., 1 day to 31 days) for the first asset, and for a third interval of time (e.g., 1 month to 12 months) for the first asset. Furthermore, in the non-limiting embodiment, the asset event database 504 stores the data associated with the edge devices 161a-161n for the first interval of time (e.g., 1 hour to 24 hours minutes) for all assets in a connected building (e.g., a second asset hierarchy level), for the second interval of time (e.g., 1 day to 31 days) for all the assets in the connected building, and for the third interval of time (e.g., 1 month to 12 months) for the all the assets in the connected building.

In one or more embodiments, the APO system 502 repeatedly updates data of the asset event database 504 based on the data provided by the edge devices 161a-161n during the one or more intervals of time associated with the asset event database 504. For instance, in one or more embodiments, the APO system 502 stores new data and/or modified data associated with the edge devices 161a-161n. In one or more embodiments, the APO system 502 repeatedly scans the edge devices 161a-161n to determine new data for storage in the asset event database 504. In one or more embodiments, the APO system 502 formats one or more portions of the data associated with the edge devices 161a-161n. For instance, in one or more embodiments, the APO system 502 provides a formatted version of the data associated with the edge devices 161a-161n to the asset event database 504. In an embodiment, the formatted version of the asset data 314 is formatted with one or more defined formats associated with the one or more intervals of time and/or the one or more asset hierarchy levels. A defined format is, for example, a structure for data fields of the asset event database 504. In various embodiments, the formatted version of the data associated with the edge devices 161a-161n is stored in the asset event database 504.

In one or more embodiments, the APO system 502 identifies and/or groups data types for data associated with the edge devices 161a-161n based on the one or more intervals of time (e.g., one or more reporting intervals of time) and/or the one or more asset hierarchy levels. In one or more embodiments, the APO system 502 employs batching, concatenation of data associated with the edge devices 161a-161n, identification of data types, merging of data associated with the edge devices 161a-161n, grouping of data associated with the edge devices 161a-161n, reading of data associated with the edge devices 161a-161n, and/or writing of data associated with the edge devices 161a-161n to facilitate storage of data associated with the edge devices 161a-161n within the asset event database 504. In one or more embodiments, the APO system 502 groups data associated with the edge devices 161a-161n based on corresponding features and/or attributes of the data. In one or more embodiments, the APO system 502 groups data associated with the edge devices 161a-161n based on corresponding identifiers (e.g., a matching asset hierarchy level, a matching asset, a matching connected building, etc.) for the asset data 314. In one or more embodiments, the APO system 502 employs one or more locality-sensitive hashing techniques to group data associated with the edge devices 161a-161n based on similarity scores and/or calculated distances between different data associated with the edge devices 161a-161n. In one or more embodiments, at least a portion of the data stored in the asset database 318 is included in the alarm tuning recommendation data 322.

In various embodiments, the APO system 502 periodically collects alarm data (e.g., alarm configuration data, alarm event data, etc.) from the edge devices 161a-161n based on a set of alarm management rules for the edge devices 161a-161n. Additionally or alternatively, in various embodiments, the APO system updates and/or correlate configuration context for the alarm data based on a set of alarm management rules for the edge devices 161a-161n. The set of alarm management rules can include one or more rules for adding delay to alarms, one or more rules based on alarm signal type (e.g., flow alarm, pressure alarm, one or more rules for priority specific alarm settings, one or more rules based on a type of industrial process associated with an alarm, one or more rules based on a type of industrial asset associated with an alarm, one or more rules based on location, one or more rules based on industrial zone, one or more exception rules for an alarm, one or more override rules for an alarm, and/or one or more other types of rules.

In various embodiments, the APO system 502 identifies certain alarms that satisfy defined criteria associated with a certain number of excessive alarms (e.g., bad actor alarms). In various embodiments, the APO system 502 identifies certain alarms deemed to be beneficial for alarm tuning recommendations. In various embodiments, the APO system 502 determines a current delay setting and/or a maximum delay setting for alarms that satisfy defined criteria associated with a certain number of excessive alarms. In various embodiments, the APO system 502 performs a simulation of alarms reductions based on different alarm count reduction predictions to identify a potential improvement in alarm counts. In certain embodiments, the alarm configuration setting recommendations include optimal predicted delay settings (e.g., optimal on-delay settings, optimal off-delay settings, etc.). In various embodiments, the APO system 502 calculates an additional improvement opportunity (e.g., a number of alarm reductions) for one or more alarms and determines the alarm configuration settings for the one or more alarms if constraints are relaxed. In various embodiments, the APO system 502 prioritizes alarm tuning recommendations based on priority and/or estimated alarm reduction opportunity. In various embodiments, the APO system 502 aggregate alarm tuning recommendations based on controller identifiers and/or site level identifiers related to respective alarms.

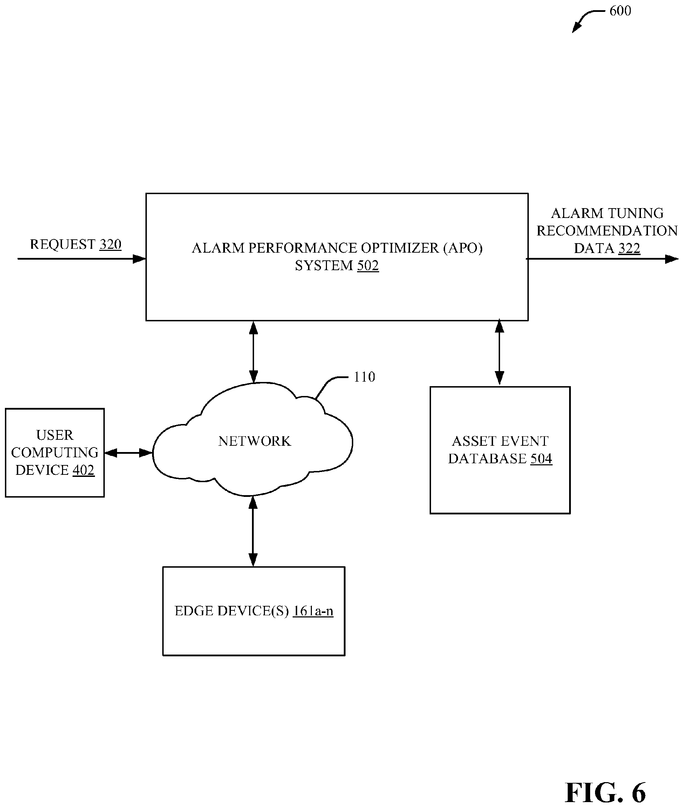

FIG. 6 illustrates a system 500' that provides another exemplary environment according to one or more described features of one or more embodiments of the disclosure. In an embodiment, the system 500' corresponds to an alternate embodiment of the system 500 shown in FIG. 5. According to an embodiment, the system 500' includes the APO system 502, the edge devices 161a-161n, the asset event database 504 and/or the user computing device 402. In one or more embodiments, the user computing device 402 includes the user computing device system 302. Additionally, in one or more embodiments, the user computing device 402 also includes the visual display 404, the one or more speakers 406, the one or more cameras 408, the one or more microphones 410, the GPS device 412, the gyroscope 414, the one or more wireless communication devices 416, and/or the power supply 418.

In one or more embodiments, the user computing device 402 is in communication with the APO system 502 via the network 110. In one or more embodiments, the user computing device 402 is a mobile computing device, a smartphone, a tablet computer, a mobile computer, a desktop computer, a laptop computer, a workstation computer, a wearable device, a virtual reality device, an augmented reality device, or another type of computing device located remote from the APO system 502. In an embodiment, the user computing device 402 transmits the request 320 to the APO system 502 via the network 110. For instance, in one or more embodiments, the user computing device 402 of the user computing device 402 transmits the request 320 to the APO system 502 via the network 110. In another embodiment, the APO system 502 transmits the alarm tuning recommendation data 322 to the user computing device 402 via the network 110. For instance, in one or more embodiments, the APO system 502 communicates the alarm tuning recommendation data 322 to the user computing device 402 of the user computing device 402 via the network 110.

In one or more embodiments, the alarm tuning recommendation data 322 includes one or more visual elements for the visual display 404 of the user computing device 402 that renders the interactive user interface based on a respective user interface configuration. In certain embodiments, the visual display 404 of the user computing device 402 displays one or more graphical elements associated with the alarm tuning recommendation data 322. In certain embodiments, the visual display 404 of the user computing device 402 presents one or more interactive display elements associated with the alarm tuning recommendation data 322. In another example, in one or more embodiments, the alarm tuning recommendation data 322 includes one or notifications associated with the alarm tuning recommendation data 322. In one or more embodiments, the alarm tuning recommendation data 322 allows a user associated with the user computing device 402 to make decisions and/or perform one or more actions with respect to the one or more industrial processes, the one or more industrial assets, related alarms, and/or related alarm configuration parameters for the alarms.

In various embodiments, the interactive user interface rendered via the visual display 404 of the user computing device 402 can display the alarm tuning recommendation data 322 as disparate site information configured within an interactive dashboard visualization. In various embodiments, the alarm tuning recommendation data 322 can provide information such as alarm tuning recommendations to improve alarm performance, distribution of the alarm tuning recommendations based on impact, real-time status as to whether an alarm tuning recommendation has been acted upon (e.g., whether respective alarm configuration parameters have been tuned, etc., a distribution of the recommendations based on asset (e.g., controller) to identify which areas of an industrial environment have untapped opportunities to improve respective industrial processes, etc. Additionally or alternatively, the alarm tuning recommendation data 322 can provide information such as whether higher impact recommendations are acted on, how many assets within an industrial environment have opportunities available, whether other recommendations associated with medium and/or lower impact recommendations are acted on, etc.

In various embodiments, the interactive user interface rendered via the visual display 404 of the user computing device 402 provides alarm recommendation views to allow a user to assess opportunity for improvements in form of alarm tuning recommendations, assess information regarding a potential increase in alarm performance based on a certain reduction of alarm count, and/or apply recommendations. In various embodiments, the interactive user interface rendered via the visual display 404 of the user computing device 402 provides alarm recommendation views to allow a user to analyze metrics to access regarding a number of recommendations that are available, a number of recommendations that are acted on, and/or distribution of recommendations based on impact. In various embodiments, the interactive user interface rendered via the visual display 404 of the user computing device 402 allows a user to assess a predicted total accrued benefit of the recommendations for the site. In various embodiments, the interactive user interface renders information such as recommended delay values for alarms, alarm configurations with context-based navigation to tag details regarding alarms, opportunities for alarm reduction if alarm configuration parameters are altered, alarm events distributions such as duration distribution, etc.

In various embodiments, the interactive user interface rendered via the visual display 404 of the user computing device 402 allows a user to select new alarm configuration parameter values. In various embodiments, the interactive user interface rendered via the visual display 404 of the user computing device 402 allows a user to accept recommendation changes of one alarm parameter of an alarm, multiple alarm parameters of an alarm, or multiple parameters of multiple alarms. In various embodiments, the interactive user interface rendered via the visual display 404 of the user computing device 402 allows a user to reject one or more recommended alarm configuration parameter values, to provide information related to a reason for the rejection, and/or to add a recommended alarm configuration parameter value to an exception list (e.g., a blacklist) as not to be considered for future alarm tuning recommendations. In various embodiments, the interactive user interface rendered via the visual display 404 of the user computing device 402 additionally provides a recommendation report for one or more systems for which parameters are not managed by the APO system 502.

In various embodiments, the interactive user interface rendered via the visual display 404 of the user computing device 402 allows filtering of the alarm tuning recommendation data and/or related interactive display elements. Additionally, one or more actions performed with respect to interactive display elements of the interactive user interface of the user computing device 402 can initiate one or more actions with respect to the APO system 502. For example, one or more actions performed with respect to interactive display elements of the interactive user interface of the user computing device 402 can initiate an update to data stored in the asset event database 504 and/or an alarm configuration management portion of the APO system 502.

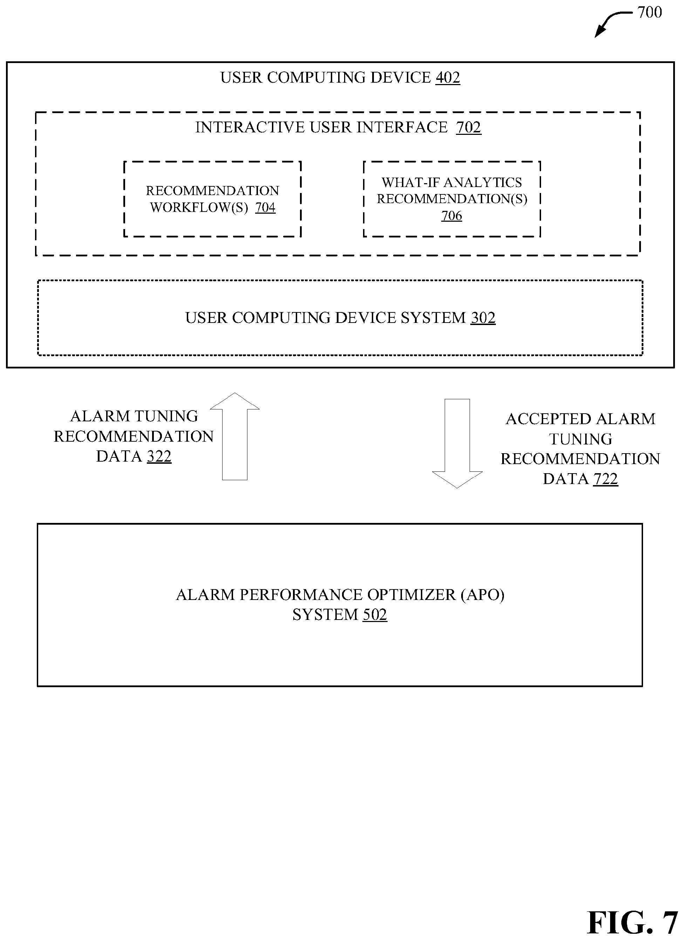

FIG. 7 illustrates a system 700 according to one or more described features of one or more embodiments of the disclosure. In an embodiment, the system 700 includes the user computing device system 302 and the APO system 502. In one or more embodiments, the system 700 includes the user computing device system 302 to facilitate generation of an interactive user interface 702. In one or more embodiments, the interactive user interface 702 is rendered via the visual display 404 of the user computing device system 302. Furthermore, in certain embodiments, the APO system 502 is communicatively coupled to the edge devices 161a-161n and/or the asset event database 504. The interactive user interface 702 is associated with a dashboard visualization service (e.g., an alarm performance optimizer service). In one or more embodiments, the interactive user interface 702 is associated with the application services layer 225. In one or more embodiments, the interactive user interface 702 is accessible and/or implemented via the user computing device 402. In one or more embodiments, the interactive user interface 702 is configured to provide the interactive user interface associated with the alarm tuning recommendation data 322. In one or more embodiments, the APO system 502 is configured to provide the alarm tuning recommendation data 322 to the user computing device 402 to facilitate rendering of the interactive user interface 702 related to the portfolio of assets.

In one or more embodiments, the interactive user interface 702 is configured to render one or more recommendation workflows 704 and/or one or more what-if analytics recommendations 706. The one or more recommendation workflows 704 can be, for example, a series of user interface configurations to facilitate presenting and/or accepting one or more alarm tuning recommendations associated with the alarm tuning recommendation data 322. The one or more what-if analytics recommendations 706 can include respective interactive matrix display elements including a matrix arrangement of respective interactive display elements related to the alarm tuning recommendation data 322 to facilitate a what-if analysis (e.g., with respect to performance of one or more industrial processes and/or one or more industrial assets) for accepting and/or declining one or more alarm tuning recommendations associated with the alarm tuning recommendation data 322. In certain embodiments, the user computing device system 302 can provide accepted alarm tuning recommendation data 722 to the APO system 502 based on one or more user interactions with respect to the interactive user interface 702. The accepted alarm tuning recommendation data 722 can include one or more accepted alarm tuning recommendation from a set of alarm tuning recommendations included in the alarm tuning recommendation data 322.

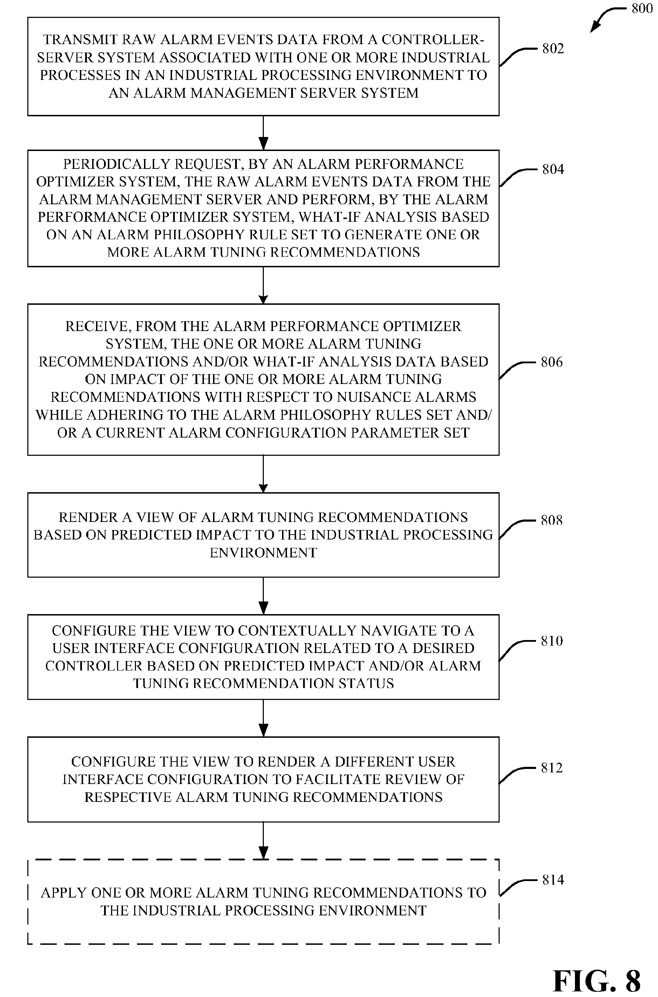

FIG. 8 illustrates a method 800 for obtaining alarm tuning recommendations for alarm configuration parameters related to one or more industrial processes in an industrial environment, in accordance with one or more embodiments described herein. In one or more embodiments, the method 800 is associated with the user computing device system 302, a controller associated with one or more industrial processes (e.g., a controller in controller-server system 906), and alarm performance optimizer (APO) system 502. In one or more embodiments, the method 800 begins at step 802 that transmits raw alarm events data from a controller-server system associated with one or more industrial processes in an industrial processing environment (e.g., industrial site 902) to an alarm management server system (e.g., APO system 502). For instance, in one or more embodiments, controller-server system 906 continually transmits raw alarm events data associated with a particular industrial process at an industrial processing site (e.g., industrial site 902) to the APO system 502. The controller-server system can include one or more controllers and/or one or more servers. In various embodiments, the raw alarm events data comprises alarm identifiers such as tag names and types, alarm priorities, and historical alarm trigger events associated with a controller (e.g., a controller in controller in controller-server system 906) as well as alarm configuration parameters such as on- and off-delay values, alarm limits, and other alarm settings. In various embodiments, the alarm configuration parameters can be stored in an alarm management server system of an industrial site (e.g., alarm management server system 904 of industrial site 902) and transmitted to the APO system 502.

The method 800 also includes a step 804 that periodically requests, by an alarm performance optimizer system, the raw alarm events data from the alarm management server and performs, by the alarm performance optimizer system, what-if analysis based on an alarm philosophy rule set to generate one or more alarm tuning recommendations. In various embodiments, a user computing device system can periodically transmit a request to obtain what-if analysis of the raw alarm events data by the APO system 502. For instance, the user computing device system 302, via the communication component 304, transmits request 320 to APO system 502. In one or more embodiments, the request 320 comprises one or more controller identifiers and one or more alarm identifiers associated with one or more industrial processes. In one or more embodiments, the user computing device system 302 may determine a routine schedule in which to transmit the request 320 to the APO system 502. Additionally or alternatively, the user computing device system 302 may transmit a request for what-if analysis of the raw alarm events data pertaining to a particular period in time. For instance, user computing device system 302 may transmit a request 320 to APO system 502 pertaining to a particular range of dates (e.g., a particular week, month, or year) associated with the raw alarm events data of controller-server system 906.

The method 800 also includes a step 806 that receives, from the alarm performance optimizer system, the one or more alarm tuning recommendations and/or what-if analysis data based on impact of the one or more alarm tuning recommendations with respect to nuisance alarms while adhering to the alarm philosophy rules set and/or a current alarm configuration parameter set. In various embodiments, a user computing device system receives, from the APO system 502, alarm tuning recommendations and additional what-if analysis (e.g., as comprised in alarm tuning recommendation data 322) based on predicted impact data associated with the alarm tuning recommendations. In one or more embodiments, the APO system 502 analyzes the alarm philosophy rule set of a particular industrial environment before generating alarm tuning recommendations for that particular industrial environment. In various embodiments, an alarm philosophy rule set can be a set of alarm rules, configurations, overrides, and/or exceptions associated with the industrial processes of a particular industrial environment (e.g., industrial site 902). Alarm philosophy rules can include, but are not limited to: on- and off-delay settings including maximum delay limits based on specific measurements of an industrial process (e.g., fluid flow, pressure, and/or level); rules determining whether on- or off-delays can be applied to particular categories of alarms (e.g., only applying on-delay to high priority alarms); and/or overrides and exceptions specific to a particular industrial environment.

The method 800 also includes a step 808 that renders a view of alarm tuning recommendations based on predicted impact to the industrial processing environment. In various embodiments, the rendered view provides for viewing the alarm tuning recommendations and/or what-if analysis of the raw alarm events data (e.g., alarm tuning recommendation data 322) generated by the APO system 502 based on the request 320. In one or more embodiments, the alarm tuning recommendation data 322 is generated by the APO system 502 for one or more alarm identifiers based on alarm insight data associated with respective alarm count reduction predictions for the alarm configuration parameters associated with one or more industrial processes. In one or more embodiments, the alarm tuning recommendation data 322 can be viewed on an interactive user interface of a user computing device (e.g., interactive user interface 702 of user computing device 402). In various embodiments, the alarm tuning recommendation data 322 can be categorized and displayed on the user computing device 402 (e.g., on the visual display 404) as an interactive user interface (e.g., interactive user interface 702). In one or more embodiments, the alarm tuning recommendation data 322 can be displayed as interactive display elements (e.g., interactive buttons, hyperlinks, graphs, charts, tables, and/or matrices) and arranged on the interactive user interface 702 in various configurations based on predicted impact data associated with one or more alarm tuning recommendations. In various embodiments, the predicted impact data is associated with respective impact classifications (e.g., low impact, medium impact, and/or high impact) for one or more industrial processes by tuning respective alarm configuration parameters for the one or more industrial processes. In one or more embodiments, tuning the respective alarm configuration parameters (e.g., based on alarm tuning recommendations generated by the APO system 502) comprises adjusting the alarm limits and/or delay values of one or more alarms associated with the one or more industrial processes. The predicted impact of the alarm tuning recommendations can thus be classified and compiled into interactive display elements (e.g., interactive buttons, hyperlinks, graphs, charts, tables, and matrices). In one or more embodiments, the interactive display elements can be arranged on the interactive user interface 702 based on the respective impact classifications.

Additionally or alternatively, the alarm tuning recommendation data 322 can be displayed as interactive display elements (e.g., interactive buttons, hyperlinks, graphs, charts, tables, and/or matrices) and arranged on the interactive user interface 702 in various configurations based on predicted optimization data. In one or more embodiments, the alarm tuning recommendation data 322 comprises predicted optimization data associated with a degree of reduction (e.g., an estimated degree of reduction) in a number of alarms based on tuning of respective alarm configuration parameters for one or more industrial processes.

Additionally or alternatively, the alarm tuning recommendation data 322 can be displayed as interactive display elements (e.g., interactive buttons, hyperlinks, graphs, charts, tables, and/or matrices) and arranged on the interactive user interface 702 in various configurations based on predicted industrial operations metrics data. In one or more embodiments, the alarm tuning recommendation data 322 comprises predicted industrial operations metrics data associated with a predicted performance of the one or more industrial processes based on tuning of respective configuration parameters for the one or more industrial processes.

The method 800 also includes a step 810 that configures the view to contextually navigate to a user interface configuration related to a desired controller based on predicted impact and/or alarm tuning recommendation status. In various embodiments, the user computing device 402 can be used to contextually navigate to a user interface configuration related to a desired industrial processing environment (e.g., industrial site 902) and/or to one or more assets (e.g. a controller in controller-server system 906) associated with the industrial processing environment based on predicted impact data and alarm tuning recommendation status. In one or more embodiments, an alarm tuning recommendation status represents whether one or more alarm tuning recommendations (e.g., as generated by APO system 502) have been employed, or "acted on", in an industrial processing environment. Additionally, predicted impact data associated with an alarm tuning recommendation status can be classified (e.g., low impact, medium impact, high impact) and related to one or more controllers in an industrial processing environment. In one or more embodiments, controller identifiers are associated with the controllers (e.g., a controller in controller-server system 906) of an industrial processing site (e.g., industrial site 902) and predicted impact data and alarm tuning recommendations (e.g., alarm tuning recommendation data 322) can be associated with a particular controller identifier. For example, alarm tuning recommendation data 322 can be displayed as interactive display elements (e.g., interactive buttons, hyperlinks, graphs, charts, tables, and/or matrices) and arranged on the interactive user interface 702 of user computing device 402 in various configurations such that the interactive user interface only displays alarm tuning recommendation data associated with a particular controller identifier. In one or more embodiments, a navigational interactive display element including a real-time status of updates of one or more alarm identifiers (e.g. alarm tuning recommendation status updates) can be generated on the interactive user interface 702. In response to an interaction with respect to the navigational interactive display element, the configuration of interactive user interface 702 can be altered to provide the ability to alter respective alarm configuration parameters for one or more industrial processes as will be seen in the following steps of the method 800.

The method 800 also provides a step 812 that configures the view to render a different user interface configuration to facilitate review of respective alarm tuning recommendations. In one or more embodiments, the alarm tuning recommendation data 322 can be configured as interactive display elements (e.g., interactive buttons, hyperlinks, graphs, charts, tables, and/or matrices) and arranged on the interactive user interface 702 of user computing device 402 in various configurations. By way of a navigational interactive display element, the interactive user interface 702 can be reconfigured to display individual alarm tuning recommendations (e.g., as generated by APO system 502) associated with particular alarm identifiers. In one or more embodiments, the particular alarm identifiers can be arranged based on various characteristics including, but not limited to alarm tags (a grouping of related process alarms) or names, alarm types, associated controller identifiers, alarm priority, predicted impact, alarm delay values, and/or alarm recommendation status. In one or more embodiments the individual alarm tuning recommendations can be associated with one or more alarm configuration parameters associated with one or more industrial processes.

Additionally or alternatively, in one or more embodiments, the interactive user interface 702 can be configured to arrange interactive display elements associated with what-if analysis comprised in the alarm tuning recommendation data 322. In one or more embodiments, the what-if analysis comprises potential alarm reductions related to respective alarm identifiers based on different combinations of on- and off-delay values. In one or more embodiments, the interactive display elements associated with the what-if analysis includes histograms detailing the distribution of the potential combinations of the on- and off-delay values and the predicted impact of the on- and off-delay values on the industrial process environment.

The method 800 also provides, in certain embodiments, a step 814 that applies one or more alarm tuning recommendations to the industrial processing environment. In one or more embodiments, an individual alarm tuning recommendation can be accepted or rejected via an interactive user interface. For example, the user computing device 402 can display individual alarm tuning recommendations (e.g., from the alarm tuning recommendation data 322) associated with one or more alarm configuration parameters related to one or more industrial processes and a respective acceptance or rejection indication for the alarm tuning recommendations can be received by the interactive user interface 702. Additionally, alarm tuning recommendations can be applied to one or more controllers related to the industrial processing environment. In one or more embodiments, a plurality of alarm tuning recommendations may be accepted or rejected simultaneously. In one or more embodiments, one or more alarm identifiers may be added to a list of exceptions. For example, the APO system 502 may reconfigure the alarm philosophy rule set for a particular industrial environment (e.g., industrial site 902) such that one or more alarm identifiers will be excepted from future analysis by the APO system 502. The application of one or more alarm tuning recommendations to an industrial processing environment provides one or more technical improvements such as, but not limited to, reducing the manual effort required collate the raw alarm events data, streamline it into appropriate metrics, and employ actionable insights as well as reducing the amount of "chattering" alarms that can add to the cognitive load of a human operator in an industrial processing environment, thus improving safety to plant personnel and equipment.

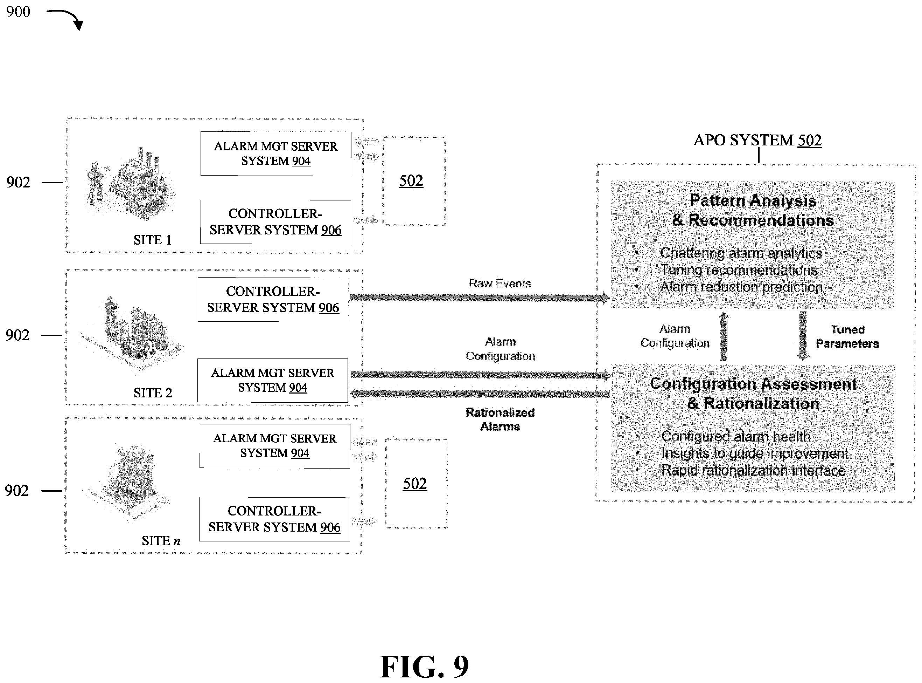

FIG. 9 illustrates an exemplary industrial environment system integrated with an alarm performance optimizer system, in accordance with one or more embodiments described herein. In one or more embodiments, an industrial environment system includes one or more industrial sites (e.g., industrial site 902). In one or more embodiments, industrial site 902 includes an alarm management server system 904 and a controller-server system 906. In one or more embodiments, the controller-server system 906 continually stores and transmits raw alarm events data associated with a particular industrial process at an industrial processing site (e.g., industrial site 902) to the APO system 502. The controller-server system 906 can include one or more controllers and/or one or more servers. In one or more embodiments, the raw alarm events data includes alarm identifiers such as tag names and types, alarm priorities, and historical alarm trigger events associated with a controller (e.g., a controller in controller-server system 906) as well as alarm configuration parameters such as on- and off-delay values, , alarm limits, and alarm settings . In various embodiments, the alarm configuration parameters can be stored in an alarm management server system of an industrial site (e.g., alarm management server system 904 of industrial site 902) and transmitted to the APO system 502. In one or more embodiments, the alarm configuration parameters stored in alarm management server system 904 reflect an industrial environment's alarm philosophy, where the alarm philosophy can be a set of alarm rules, configurations, overrides, and/or exceptions associated with the processes of a particular industrial environment. In one or more embodiments, the APO system 502 can reconfigure the alarm philosophy rule set for one or more respective industrial environments (e.g., industrial site 902). For example, industrial site 1 may have a different alarm philosophy than industrial site 2, which may have a different alarm philosophy than industrial site *n.* In this regard, the APO system 502 generates alarm tuning recommendation data (e.g., alarm tuning recommendation data 322) based on the raw alarm events data received from controller-server system 906 and the site-specific alarm configuration parameters received from the alarm management server system 904 of the industrial site 902.

In one or more embodiments, the APO system 502 performs pattern analysis on the raw alarm events data received from the controller-server system 906. The APO system 502 generates alarm tuning recommendation data (e.g., alarm tuning recommendation data 322) based on one or more alarm identifiers and alarm insight data associated with respective alarm count reduction predictions for the one or more alarm configuration parameters. In one or more embodiments, the alarm tuning recommendation data 322 includes alarm reduction predictions and alarm rationalizations. An alarm reduction prediction is a prediction of a number of alarms that can be reduced (e.g., by adjusting an alarm's limits or delay values) if certain alarm configuration parameters are tuned according to the alarm tuning recommendations of the APO system 502. Alternatively, an alarm rationalization is a justification of keeping a particular alarm in place. In one or more embodiments, an alarm rationalization may be the result of a site-specific alarm philosophy (e.g., an alarm rule restricting the adjustment of a particular alarm delay value) and/or a rejection indication received by the interactive user interface 702. In one or more embodiments, once the APO system 502 has generated the alarm tuning recommendation data 322 based on the pattern analysis of the raw alarm events data and site-specific alarm configurations and philosophies, the alarm tuning recommendation data 322 is transmitted to the alarm management server system 904 of the industrial site 902.

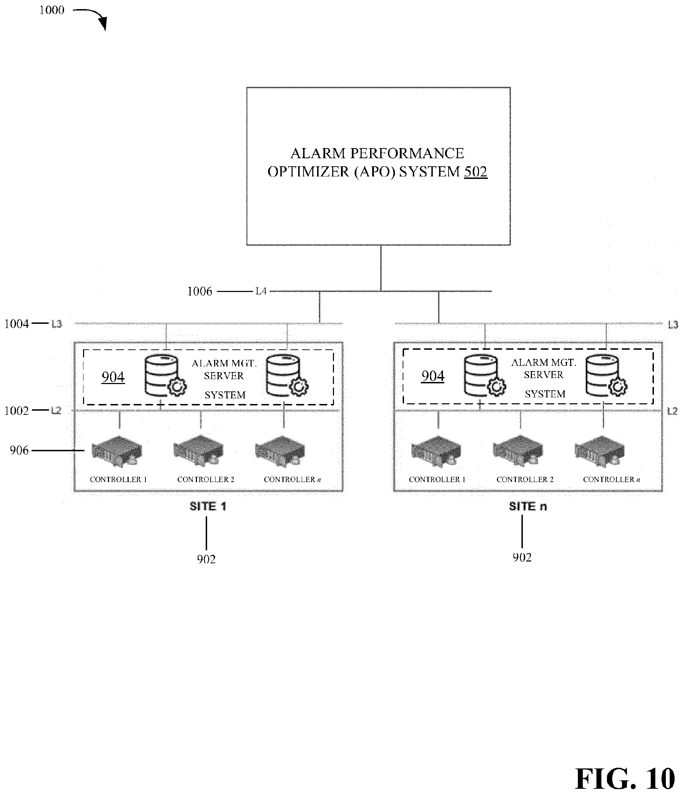

FIG. 10 illustrates a networking hierarchy of an exemplary industrial environment system integrated with an alarm performance optimizer system, in accordance with one or more embodiments described herein. In particular, FIG. 10 illustrates how the discrete components of an exemplary industrial environment are networked together in order to interface with the APO system 502, and how they are arranged respectively with one another in order to transmit information between the different layers of the networking hierarchy. For instance, the controllers associated with one or more industrial processes in an industrial environment (e.g., the controllers in controller-server system 906), are involved with sensing and manipulating the physical industrial processes they are associated with. For example, a controller in controller-server system 906 may continually measure the pressure or flow of a dynamic fluid in a particular industrial process and transmit that raw information via a level-2 networking layer (e.g., networking layer 1002). In one or more embodiments, networking layer 1002 pertains to the SCADA processes of an exemplary embodiment. In various embodiments, networking layer 1002 is the first human-machine interfacing layer responsible for controlling physical processes of the industrial components in the lower layers. Additionally, the networking layer 1002 connects controller-server system 906 to the alarm management server system 904 of an industrial environment such as industrial site 902. The alarm management server system 904 is responsible for storing and compiling the raw alarm events data captured by the controller-server system 906. In one or more embodiments, networking layer 1004 can be a level-3 operations and management layer. In one or more embodiments, the alarm management server system 904, via networking layer 1004, is responsible for the maintenance of the raw alarm events data, and, as such, centralizes the raw alarm events data to make it available to the highest level of the networking hierarchy (e.g., networking layer 1006). In one or more embodiments, networking layer 1006 can be a level-4 layer. In one or more embodiments, the networking layer 1006 connects the one or more industrial sites (e.g., industrial site(s) 902) such that the centralized raw alarm events data associated with the respective industrial sites can be transmitted to and analyzed by the APO system 502. In one or more embodiments, the alarm tuning recommendation data 322 generated by the APO system 502 can then be disseminated back down the respective layers of the networking hierarchy and stored in the alarm management server system 904 such that the respective alarm configuration parameters associated with the controllers in controller-server system 906 can be altered based on the alarm tuning recommendations generated by APO system 502.

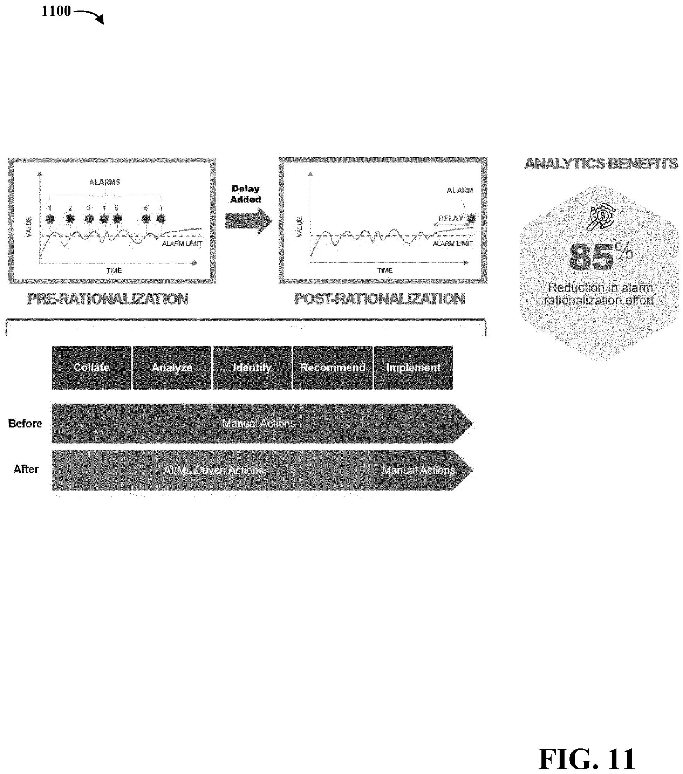

FIG. 11 illustrates the technical benefits realized by an exemplary industrial processing environment employing one or more embodiments described herein. For example, FIG. 11 depicts an industrial environment with more than 20,000 alarm tags that each contain 4-6 alarms. Reviewing just 20% of the alarms that may be identified as "nuisance" alarms can take more than 600 man-hours. The benefits of applying the alarm analysis techniques of the present disclosure (e.g., by applying the alarm tuning recommendation data 322 generated by APO system 502) can result in an 85% reduction in alarm rationalization efforts for an industrial enterprise. Furthermore, not only do the techniques disclosed herein benefit the technical industrial processing components of an industrial environment by streamlining the processing of raw alarm events data, but they also reduce the cognitive load, or "alarm fatigue," of the human operators working in the industrial environment. As such, significant increases to the safety and efficiency of the industrial personnel and equipment can be made.

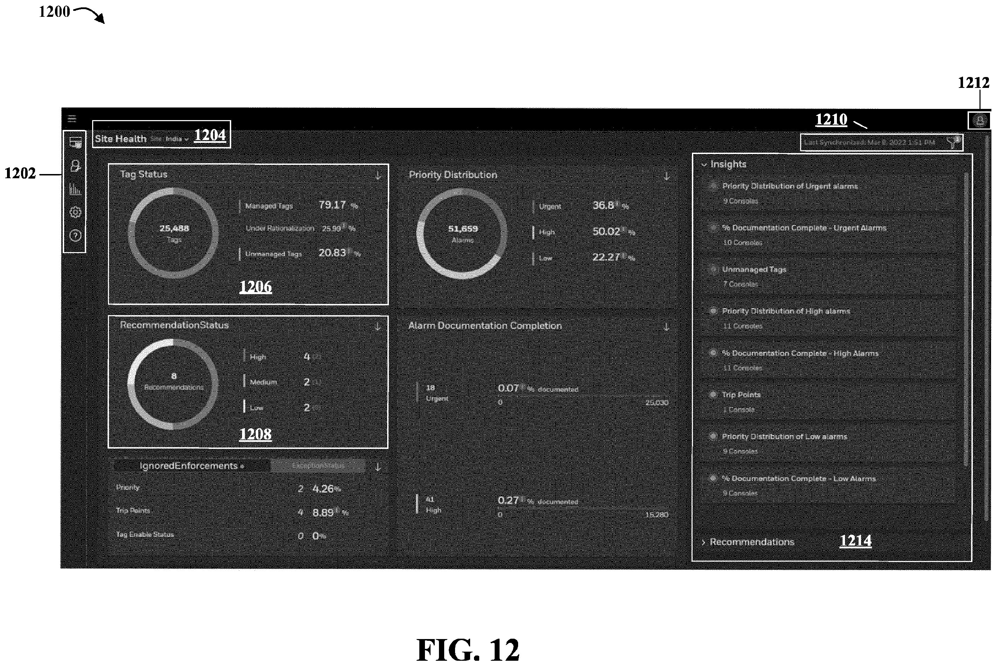

FIG. 12 illustrates an exemplary interactive user interface 1200 according to one or more embodiments of the disclosure. In an embodiment, the interactive user interface 1200 is an interactive user interface of the user computing device 402 that is presented via the visual display 404. In one or more embodiments, a dashboard visualization is rendered via the interactive user interface 1200. In certain embodiments, the data visualization rendered via the interactive user interface 1200 presents a visualization of one or more portions of the alarm tuning recommendation data 322 to facilitate analysis and/or management of the alarm configuration parameters associated with one or more industrial processing environments via the dashboard visualization. In certain embodiments, the dashboard visualization rendered via the interactive user interface 1200 presents navigational interactive display elements 1202 for navigating between various configurations of the interactive user interface 1200.

Additionally or alternatively, in certain embodiments, the dashboard visualization rendered via the interactive user interface 1200 presents navigational interactive display elements 1204 for configuring various interactive user interfaces based on one or more industrial environments (e.g., industrial site 902). Additionally or alternatively, in certain embodiments, the dashboard visualization rendered via the interactive user interface 1200 presents alarm tag status data 1206 configured as distributions and/or respective interactive display elements associated with a plurality of alarm identifiers (e.g., alarm tags) managed by an exemplary embodiment of the present disclosure.

Additionally or alternatively, in certain embodiments, the dashboard visualization rendered via the interactive user interface 1200 presents recommendation status data 1208 configured as distributions and/or respective interactive display elements associated with the recommendation status of various alarm identifiers categorized by predicted impact. For example, the categories detailed by interactive display elements of recommendation status data 1208 comprise low, medium, and high impact alarm tuning recommendations (e.g., as generated by APO system 502), and the numerical distributions detail how many tuning recommendations of each category have been acted upon. Additionally or alternatively, in certain embodiments, the dashboard visualization rendered via the interactive user interface 1200 presents synchronization data element 1210 configured as an interactive display element. In one or more embodiments, synchronization data element 1210 presents a timestamp associated with the most current synchronization of the alarm tuning recommendation data 322 by the user computing device system 302. In one or more embodiments, the interactive display element associated with synchronization data element 1210 allows the user computing device system 302 to reconfigure the interactive user interface 1200 based on a specific period of time (e.g., a date range pertaining to a particular, day, week, month, or year), and, as such, reconfigure one or more interactive display elements associated with the alarm tuning recommendation data 322 to display data pertaining only to that specific period of time. Additionally or alternatively, in certain embodiments, the dashboard visualization rendered via the interactive user interface 1200 presents a user profile icon 1212 configured as an interactive display element that allows a human operator of the user computing device 402 to log in to an embodiment of the APO system 502 and/or reconfigure the interactive user interface 1200 based on user preferences. Additionally or alternatively, in certain embodiments, the dashboard visualization rendered via the interactive user interface 1200 presents alarm insight data 1214 configured as a plurality of interactive display elements associated with the alarm tuning recommendation data 322 associated with the one or more other interactive display elements currently presented by interactive user interface 1200. For instance, in certain embodiments, alarm insight data 1214 includes an interactive display element detailing a number of operator consoles related to a respective number of controllers (e.g., controller(s) 902) associated with alarm priority distribution data classified under the alarm priority category "urgent."

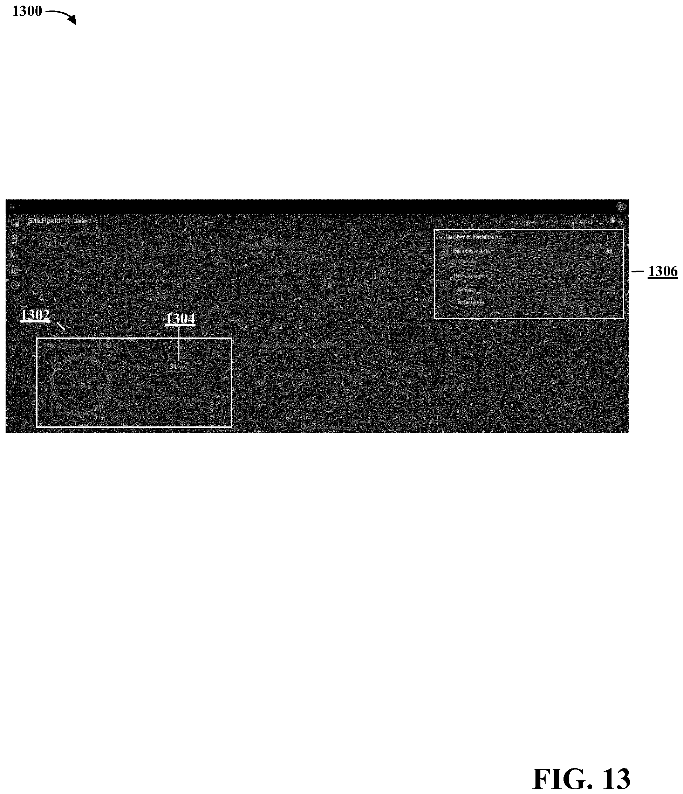

FIG. 13 illustrates an exemplary interactive user interface 1300 according to one or more embodiments of the disclosure. In an embodiment, the interactive user interface 1300 is an interactive user interface of the user computing device 402 that is presented via the visual display 404. In one or more embodiments, a dashboard visualization is rendered via the interactive user interface 1300. In certain embodiments, the data visualization rendered via the interactive user interface 1300 presents a visualization of one or more portions of the alarm tuning recommendation data 322 to facilitate analysis and/or management of the alarm configuration parameters associated with one or more industrial processing environments via the dashboard visualization. In certain embodiments, the dashboard visualization rendered via the interactive user interface 1300 presents recommendation status data 1302 configured as distributions and/or respective interactive display elements associated with the recommendation status of various alarm identifiers categorized by predicted impact. For example, the categories detailed by the interactive display elements of recommendation status data 1302 comprise low, medium, and high impact alarm tuning recommendations (e.g., as generated by APO system 502), and the numerical distributions detail how many tuning recommendations of each category have not been acted upon. For example, interactive display element 1304 is associated with predicted high impact alarm tuning recommendations. Interactive display element 1304 depicts that of the 31 total alarm tuning recommendations depicted by recommendation status data 1302, 31 alarm tuning recommendations have been categorized (e.g., by APO system 502) as having a "high" predicted impact on the industrial processing environment, and all 31 of those alarm tuning recommendations have not been acted upon such that the alarm tuning recommendations have not been employed in the respective industrial processing site. Additionally or alternatively, in certain embodiments, the dashboard visualization rendered via the interactive user interface 1300 presents alarm recommendation insight data 1306 configured as an interactive display element associated with recommendation status data 1302. In certain embodiments, alarm recommendation insight data 1406 details a number of operator consoles related to a respective number of controllers (e.g., controller(s) 902) associated with recommendation status data 1302. In one or more embodiments, alarm recommendation insight data 1306 also breaks down the number of alarm tuning recommendations that have been acted on or not acted on.

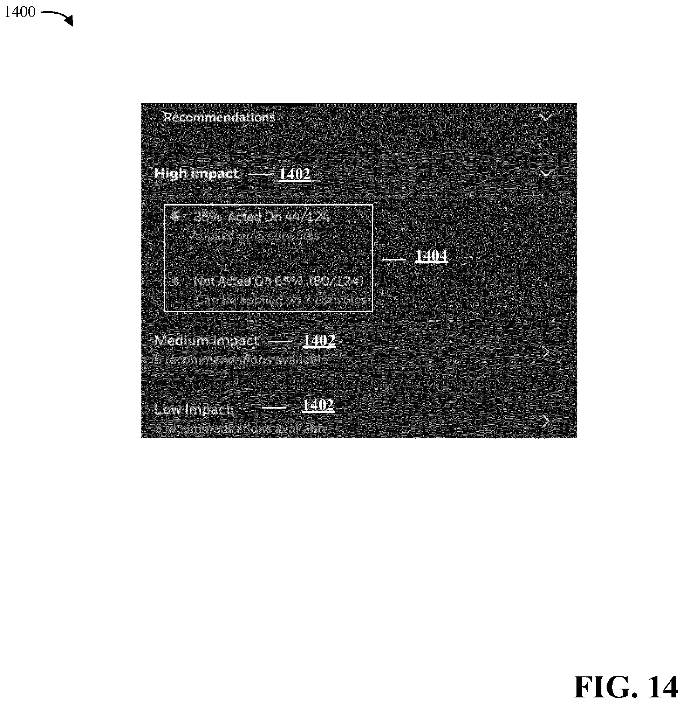

FIG. 14 illustrates an exemplary interactive user interface 1400 according to one or more embodiments of the disclosure. In an embodiment, the interactive user interface 1400 is an interactive user interface of the user computing device 402 that is presented via the visual display 404. In one or more embodiments, a data visualization is rendered via the interactive user interface 1400. In certain embodiments, the data visualization rendered via the interactive user interface 1400 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 1400 presents predicted recommendation impact data 1402 configured as respective interactive display elements categorized by the predicted impact of various alarm tuning recommendations. For example, predicted recommendation impact data 1402 can be categorized as low, medium, or high impact. Additionally, in response to an interaction with the interactive display element associated with predicted recommendation impact data 1402 (e.g., a selection indication detected by interactive user interface 1400), predicted recommendation impact distribution data 1404 can be displayed. In one or more embodiments, predicted recommendation impact distribution data 1404 details a percentage distribution of how many alarm tuning recommendations associated with the predicted recommendation impact data 1402 have been acted upon. Furthermore, predicted recommendation impact distribution data 1404 details how many operator consoles related to a respective number of controllers (e.g., controller(s) 902) are associated with the alarm tuning recommendations associated with the predicted recommendation impact data 1402. For example, predicted recommendation impact distribution data 1404 of the interactive user interface 1400 in FIG. 14 shows that 35% of the alarm tuning recommendations categorized as having a "high" predicted impact have been acted upon, and that the alarm tuning recommendations have been applied on five consoles. Conversely, predicted recommendation impact distribution data 1404 shows that 65% of the alarm tuning recommendations categorized as having a "high" predicted impact have not been acted upon, and that the remaining alarm tuning recommendations could be applied on up to seven consoles.

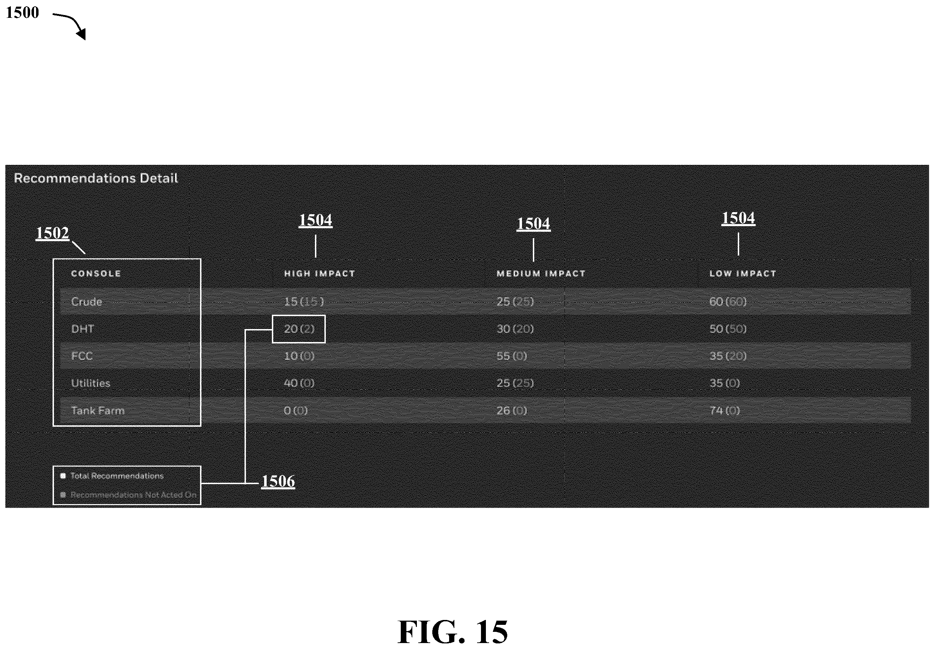

FIG. 15 illustrates an exemplary interactive user interface 1500 according to one or more embodiments of the disclosure. In an embodiment, the interactive user interface 1500 is an interactive user interface of the user computing device 402 that is presented via the visual display 404. In one or more embodiments, a data visualization is rendered via the interactive user interface 1500. In certain embodiments, the data visualization rendered via the interactive user interface 1500 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 1500 presents interactive display elements associated with the alarm tuning recommendation statuses of industrial operator consoles related to a respective number of controllers (e.g., controller(s) 902). In certain embodiments, console identifier(s) 1502 are configured as respective interactive display elements categorized by the predicted impact of various alarm tuning recommendations associated with the alarm configuration parameters of the controllers associated with the respective console identifier(s) 1502. Additionally or alternatively, in certain embodiments, interactive user interface 1500 presents predicted recommendation impact data column 1504 configured as respective interactive display elements categorized by the predicted impact of various alarm tuning recommendations. For example, predicted recommendation impact data column 1504 can be categorized as low, medium, or high impact. In one or more embodiments, predicted recommendation impact data column 1504 includes interactive display elements represented as numerical distributions of alarm tuning recommendations associated with a respective console identifier 1502. Additionally or alternatively, predicted recommendation impact data column 1504 includes interactive display elements associated with alarm recommendation ratio(s) 1506. In one or more embodiments, the alarm recommendation ratio 1506 represents the number of alarm tuning recommendations that have been acted upon out of the total number of alarms in a respective predicted recommendation impact data column 1504 for a particular console identifier 1502. For example, interactive user interface 1500 depicts a console identifier "DHT" with a total of 20 alarm tuning recommendations categorized as having a "high" predicted impact on the respective industrial environment, two of which have not been acted upon.

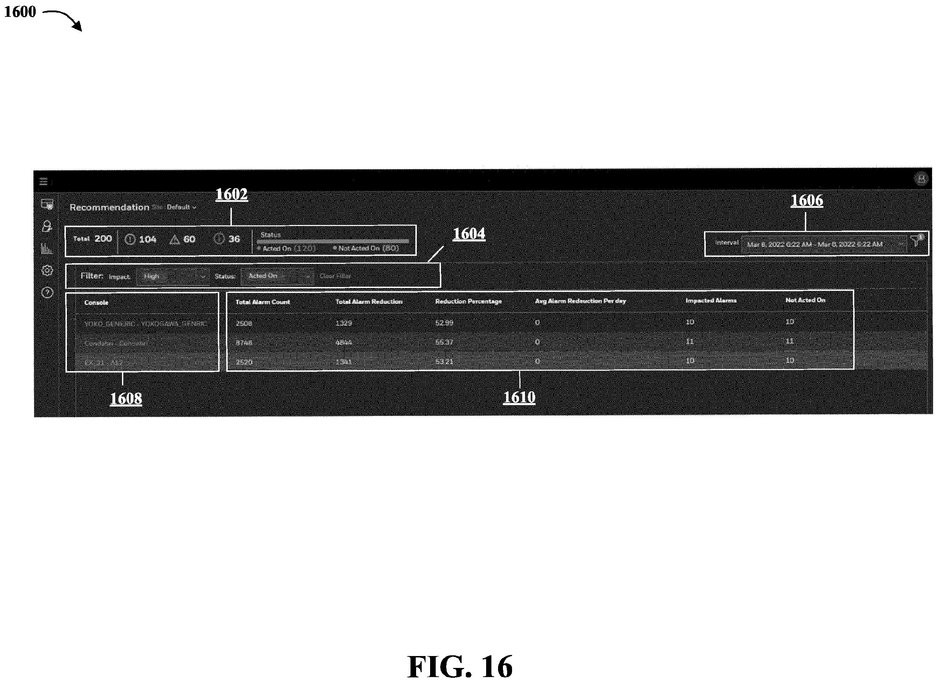

FIG. 16 illustrates an exemplary interactive user interface 1600 according to one or more embodiments of the disclosure. In an embodiment, the interactive user interface 1600 is an interactive user interface of the user computing device 402 that is presented via the visual display 404. In one or more embodiments, a data visualization is rendered via the interactive user interface 1600. In certain embodiments, the data visualization rendered via the interactive user interface 1600 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 1600 presents interactive header 1602 configured as respective interactive display elements to display the total amount of alarm tuning recommendations (e.g., as generated by APO system 502) for a particular industrial environment (e.g., as selected by a navigational interactive display element), categorized by the predicted impact of various alarm tuning recommendations. In certain embodiments, the categories depicted by the interactive display elements of interactive header 1602 comprise low, medium, and high impact alarm tuning recommendations and their respective totals. In one or more embodiments, interactive header 1602 includes a numerical distribution configured as an interactive display element such as a progress bar to depict the total number of alarm tuning recommendations that have been acted on by a particular industrial environment (e.g., industrial site 902). Additionally or alternatively, in certain embodiments, the data visualization rendered via the interactive user interface 1600 presents interactive filter bar 1604 configured as respective interactive display elements to reconfigure the interactive user interface 1600 based on various parameters. For example, the interactive filter bar 1604 includes interactive display elements associated with filtering portions of the alarm tuning recommendation data 322 based on, but not limited to, predicted alarm tuning recommendation impact and alarm tuning recommendation statuses such that when the respective interactive display elements are employed, the interactive user interface 1600 is reconfigured to display the filtered portions of the alarm tuning recommendation data 322 in positions of prominence. In one or more embodiments, the interactive filter bar 1904 can be employed to reconfigure the interactive user interface 1600 such that console identifier(s) 1908 and/ or the associated visual data 1610 is sorted and/or arranged depending on which interactive display element of the interactive filter bar 1604 is employed. Additionally or alternatively, in certain embodiments, the data visualization rendered via the interactive user interface 1600 presents analysis data element 1606 configured as an interactive display element. In one or more embodiments, analysis data element 1606 presents a time range associated with the alarm tuning recommendation data 322 by the user computing device system 302. In one or more embodiments, interaction with the interactive display element associated with analysis data element 1606 allows the user computing device system 302 to reconfigure the interactive user interface 1600 based on a specific period of time (e.g., a date range pertaining to a particular, day, week, month, or year), and, as such, reconfigure one or more interactive display elements associated with the alarm tuning recommendation data 322 to display relevant data pertaining only to that specific period of time.

Additionally or alternatively, in certain embodiments, the data visualization rendered via the interactive user interface 1600 presents console identifier(s) 1608 and visual data 1610. In one or more embodiments, console identifier(s) 1608 comprise respective interactive display elements associated with one or more console identifiers associated with respective controllers (e.g., one or more controllers in controller-server system 906) related to one or more industrial processes in an industrial environment. In one or more embodiments, the console identifier(s) 1608 are associated with the visual data 1610 such that the respective interactive display elements of visual data 1610 provide specific details (e.g., as derived from alarm tuning recommendation data 322) associated with particular console identifier(s) 1608. In one or more embodiments, the console identifier(s) 1608 are associated with alarm configuration parameters related to one or more controllers (e.g., one or more controllers in controller-server system 906) associated with one or more industrial processes, and the respective visual data 1610 includes respective interactive display elements associated with the alarm configuration parameters associated with the one or more industrial processes. In one or more embodiments, the alarm configuration parameters associated with the console identifier(s) 1608 and detailed by respective visual data 1610 can include, but are not limited to, the total alarm count associated with the console identifier (e.g., total number of alarm tags and/or individual alarms associated with the console identifier), total estimated alarm reduction (e.g., how many of the total alarms associated with the console identifier can be reduced, or "tuned," according to the respective alarm tuning recommendations generated by APO system 502), alarm reduction percentage, average alarm reduction per day, total impacted alarms, and/or total alarms not acted on. In one or more embodiments, the console identifier(s) 1608 and the respective visual data 1610 are selectable such that a selection indication of a particular console identifier 1608 allows for further analysis and/or management of the selected console identifier 1608 and the associated alarm configuration parameters represented by visual data 1610. In certain embodiments a selection indication of a particular console identifier 1608 can cause the user computing device system 302 to reconfigure the interactive user interface 1600. Additionally or alternatively, in one or more embodiments, a selection indication of a particular console identifier 1608 can cause the user computing device system 302 to update the respective alarm configuration parameters in the alarm management server system 904 of an industrial environment (e.g., industrial site 902) such that the alarm tuning recommendations generated by APO system 502 are employed by the respective one or more controllers in controller-server system 906 of the industrial environment.

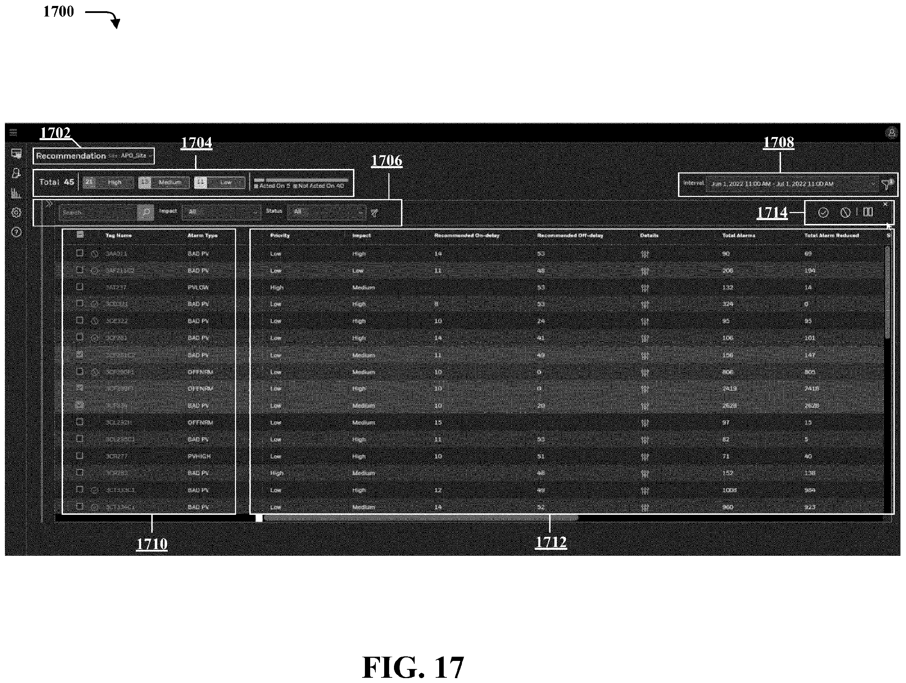

FIG. 17 illustrates an exemplary interactive user interface 1700 according to one or more embodiments of the disclosure. In an embodiment, the interactive user interface 1700 is an interactive user interface of the user computing device 402 that is presented via the visual display 404. In one or more embodiments, a data visualization is rendered via the interactive user interface 1700. In certain embodiments, the data visualization rendered via the interactive user interface 1700 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 1700 presents navigational interactive display element 1702 for configuring various interactive user interfaces based on one or more industrial environments (e.g., industrial site 902). In one or more embodiments, the navigational interactive display element 1702 can reconfigure interactive user interface 1700 based on the geological location one or more industrial environments. In certain embodiments, the user computing device system 302 will reconfigure the interactive user interface 1700 to display only the alarm identifier(s) 1710 and the associated visual data 1712 for a particular industrial environment based on a selection indication of the particular industrial environment (e.g., industrial site 902 selected by navigational interactive display element 1702).

Additionally or alternatively, in certain embodiments, the data visualization rendered via the interactive user interface 1700 presents interactive header 1704 configured as respective interactive display elements to display the total amount of alarm tuning recommendations (e.g., as generated by APO system 502) for a particular industrial environment (e.g., as selected by navigational interactive display element 1702), categorized by the predicted impact of various alarm tuning recommendations. In certain embodiments, the categories depicted by the interactive display elements of interactive header 1704 comprise low, medium, and high impact alarm tuning recommendations and their respective totals. In one or more embodiments, interactive header 1704 includes a numerical distribution configured as an interactive display element such as a progress bar to depict the total number of alarm tuning recommendations that have been acted on by a particular industrial environment (e.g., industrial site 902). Additionally or alternatively, in certain embodiments, the data visualization rendered via the interactive user interface 1700 presents interactive filter bar 1706 configured as respective interactive display elements to reconfigure the interactive user interface 1700 based on various parameters. For example, the interactive filter bar 1706 includes interactive display elements associated with filtering portions of the alarm tuning recommendation data 322 based on, but not limited to, alarm identifiers, predicted alarm tuning recommendation impact, and alarm tuning recommendation statuses such that when the respective interactive display elements are employed, the interactive user interface 1700 is reconfigured to display the filtered portions of the alarm tuning recommendation data 322 in positions of prominence. In one or more embodiments, the interactive filter bar 1706 can be employed to reconfigure the interactive user interface 1700 such that alarm identifier(s) 1710 and/ or the associated visual data 1712 is sorted and/or arranged depending on which interactive display element of the interactive filter bar 1706 is employed.

Additionally or alternatively, in certain embodiments, the data visualization rendered via the interactive user interface 1700 presents Analysis data element 1708 configured as an interactive display element. In one or more embodiments, analysis data element 1708 presents a time range associated with the alarm tuning recommendation data 322 by the user computing device system 302. In one or more embodiments, interaction with the interactive display element associated with analysis data element 1708 allows the user computing device system 302 to reconfigure the interactive user interface 1700 based on a specific period of time (e.g., a date range pertaining to a particular, day, week, month, or year), and, as such, reconfigure one or more interactive display elements associated with the alarm tuning recommendation data 322 to display relevant data pertaining only to that specific period of time.

Additionally or alternatively, in certain embodiments, the data visualization rendered via the interactive user interface 1700 presents alarm identifier(s) 1710 and visual data 1712. In one or more embodiments, alarm identifier(s) 1710 comprise respective interactive display elements associated with one or more alarm identifiers (e.g., alarm tag names or alarm types) related to one or more industrial processes in an industrial environment. In one or more embodiments, the alarm identifier(s) 1710 are associated with the visual data 1712 such that the respective interactive display elements of visual data 1712 provide specific details (e.g., as derived from alarm tuning recommendation data 322) associated with particular alarm identifier(s) 1710. In one or more embodiments, the alarm identifier(s) 1710 are associated with alarm configuration parameters related to one or more industrial processes and the respective visual data 1712 includes respective interactive display elements associated with the alarm configuration parameters. In one or more embodiments, the alarm configuration parameters associated with alarm identifier(s) 1710 and detailed by respective visual data 1712 can include, but are not limited to, alarm priorities, alarm tuning recommendation impact, recommended on-delay value, recommended off-delay value, total alarms associated with the alarm identifier (e.g., total number of alarms comprised by an alarm tag), and/or estimated total alarms reduced (e.g., how many of the total alarms comprised in an alarm tag can be reduced, or "tuned," according to the respective alarm tuning recommendation generated by APO system 502). In one or more embodiments, the alarm identifier(s) 1710 and the respective visual data 1712 are selectable such that a selection indication of a particular alarm identifier 1710 allows for further analysis and/or management of the selected alarm identifier(s) 1710 and the associated alarm configuration parameters represented by visual data 1712. In certain embodiments a selection indication of a particular alarm identifier 1710 can cause the user computing device system 302 to reconfigure the interactive user interface 1700. In one or more embodiments, a selection indication of a particular alarm identifier 1710 can cause the user computing device system 302 to update the respective alarm configuration parameters in the alarm management server system 904 of an industrial environment (e.g., industrial site 902) such that the alarm tuning recommendations generated by APO system 502 are employed by the respective controllers in controller-server system 906 of the industrial environment.

Additionally or alternatively, in certain embodiments, the data visualization rendered via the interactive user interface 1700 presents interactive button element 1714 configured as an interactive display element. In one or more embodiments, after a selection indication of one or more particular alarm identifier(s) 1710 has been received, an "acceptance" interaction with interactive button element 1714 can cause the user computing device system 302 to update the respective alarm configuration parameters in the alarm management server system 904 of an industrial environment (e.g., industrial site 902) such that the respective alarm tuning recommendations generated by APO system 502 are employed by the respective controller(s) 906 of the industrial environment. Alternatively, in one or more embodiments, after a selection indication of one or more particular alarm identifier(s) 1710 has been received, a "rejection" interaction with interactive button element 1714 can cause the user computing device system 302 to reject the respective alarm tuning recommendations, thereby rationalizing the alarm configuration parameters already in place in the alarm management server system 904.

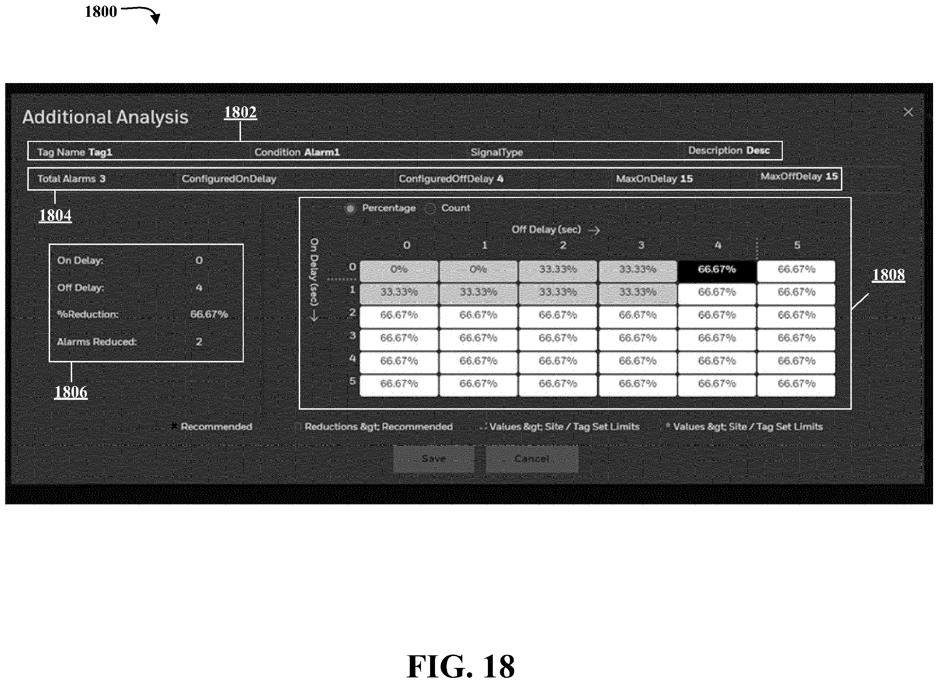

FIG. 18 illustrates an exemplary interactive user interface 1800 according to one or more embodiments of the disclosure. In an embodiment, the interactive user interface 1800 is an interactive user interface of the user computing device 402 that is presented via the visual display 404. In one or more embodiments, a data visualization is rendered via the interactive user interface 1800. In certain embodiments, the data visualization rendered via the interactive user interface 1800 presents a visualization of one or more portions of the alarm tuning recommendation data 322 as an interactive analytics matrix 1808 to facilitate what-if analysis and/or management of the alarm configuration parameters associated with one or more industrial processing environments via the interactive display elements of the interactive analytics matrix 1808. In certain embodiments, the data visualization rendered via the interactive user interface 1800 presents alarm identifier 1802 and respective visual data 1804 such that the respective interactive display elements of visual data 1804 provide specific details (e.g., as derived from alarm tuning recommendation data 322) associated with particular alarm identifier 1802. In one or more embodiments, alarm identifier 1802 comprise an alarm tag name (e.g., representing a grouping of one or more process alarms), an alarm condition, an alarm signal type, and/or an alarm description. In one or more embodiments, the alarm identifier1802 are associated with alarm configuration parameters related to one or more controllers (e.g., one or more controllers in controller-server system 906) associated with one or more industrial processes, and the respective visual data 1804 includes respective interactive display elements associated with the alarm configuration parameters associated with the one or more industrial processes. In one or more embodiments, the alarm configuration parameters associated with the alarm identifier(s) 1802 and detailed by respective visual data 1804 can include, but are not limited to, total alarms associated with the alarm identifier (e.g., total number of alarms comprised by an alarm tag), a configured on-delay value, a configured off-delay value, a maximum on-delay value and/or a maximum off-delay value.

Additionally or alternatively, in certain embodiments, the data visualization rendered via the interactive user interface 1800 presents interactive analytics matrix 1808 configured as an interactive display element. In one or more embodiments, the vertical and horizontal axes of the interactive analytics matrix 1808 represent a progressive scale of on- and off-delay values respectively. In one or more embodiments, the respective cells of the interactive analytics matrix 1808 represent predicted alarm reduction percentages based on portions of the alarm tuning recommendation data 322. For example, interactive user interface 1800 depicts that the alarm tuning recommendation associated with the matrix cell representing an off-delay value of four seconds and an on-delay value of zero seconds is predicted to reduce 66.67% of the alarms associated with the alarm identifier 1802. In other words, if the alarm tuning recommendations associated with that particular matrix cell were to be employed, the alarm configuration parameters related to the industrial processes associated with the alarm identifier 1802 would be adjusted (e.g., updated in the alarm management server system 904 by the user computing device system 302) such that a predicted 66.67% of the chattering nuisance alarms associated with the alarm identifier 1802 would be potentially eliminated.

In one or more embodiments, the respective interactive display elements of the interactive analytics matrix 1808 are selectable. In certain embodiments, a selection indication of a particular cell of the interactive analytics matrix 1808 can cause the user computing device system 302 to reconfigure the interactive user interface 1800. Additionally or alternatively, in certain embodiments, the data visualization rendered via the interactive user interface 1800 presents alarm tuning recommendation insight data element 1806 configured as an interactive display element. In one or more embodiments, the alarm tuning recommendation insight data element 1806 provides greater detail related to the individual cells of the interactive analytics matrix 1808. In certain embodiments, when a particular cell of the interactive analytics matrix 1808 is selected, the alarm configuration parameters of the respective alarm tuning recommendation associated with the matrix cell are displayed by the alarm tuning recommendation insight data element 1806. For example, when the matrix cell representing an off-delay value of four seconds and an on-delay value of zero seconds is selected, the alarm tuning recommendation insight data element 1806 displays the on- and off-delay values, the predicted percentage of alarm reduction, and/or the total number of alarms reduced by the alarm tuning recommendation associated with that matrix cell. In one or more embodiments, once a selection indication related to a cell of the interactive analytics matrix 1808 has been received, the alarm tuning recommendation (e.g., as generated by APO system 502) associated with the selected matrix cell can be employed, and, as such, the alarm configuration parameters related to the one or more industrial processes associated with the alarm identifier 1802 can be altered (e.g., by updating the respective alarm configuration parameters in the alarm management server system 904).

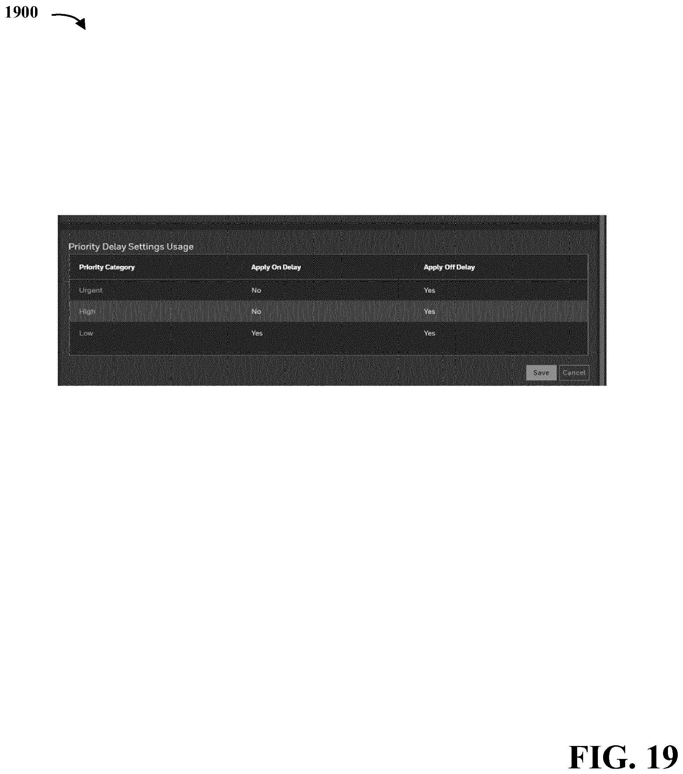

FIG. 19 illustrates an exemplary interactive user interface 1900 according to one or more embodiments of the disclosure. In an embodiment, the interactive user interface 1900 is an interactive user interface of the user computing device 402 that is presented via the visual display 404. In one or more embodiments, a data visualization is rendered via the interactive user interface 1900. In certain embodiments, the data visualization rendered via the interactive user interface 1900 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 1900 presents a priority delay settings usage interface configured as respective interactive display elements used to configure a respective industrial environment's "alarm philosophy" (e.g., the alarm philosophy of industrial site 902). In one or more embodiments, the alarm configuration parameters stored in alarm management server system 904 reflect an industrial environment's alarm philosophy, where the alarm philosophy can be a set of alarm rules, configurations, overrides, and/or exceptions associated with the industrial processes of a particular industrial environment. In one or more embodiments, the APO system 502 can reconfigure the alarm philosophy rule set for one or more respective industrial environments (e.g., industrial site 902). For example, industrial site 1 may have a different alarm philosophy than industrial site 2, which may have a different alarm philosophy than industrial site *n.* In this regard, the APO system 502 generates alarm tuning recommendation data (e.g., alarm tuning recommendation data 322) based on the raw alarm events data received from controller-server system 906 and the site-specific alarm configuration parameters and alarm philosophy rule sets for each of the industrial site(s) 902 integrated in APO system 502. (*See* FIG. 9 of the disclosure). In one or more embodiments, an industrial environment's alarm philosophy (e.g., rules designating with which type of alarm tuning recommendations to employ) can be configured based on an alarm's priority. For example, the alarm philosophy of a particular industrial environment (e.g., industrial site 902) can be configured to apply "on-delay" alarm tuning recommendations (e.g., as generated by APO system 502) to alarm configuration parameters associated with alarm identifiers that have been categorized as having a "low" priority, but not for alarm identifiers that have been categorized as having a "high" or "urgent" priority. In this regard, individual industrial environments (e.g., industrial site 902) of a larger, networked industrial enterprise may enforce alarm philosophies that are tailor-suited for the needs of the individual industrial environment.

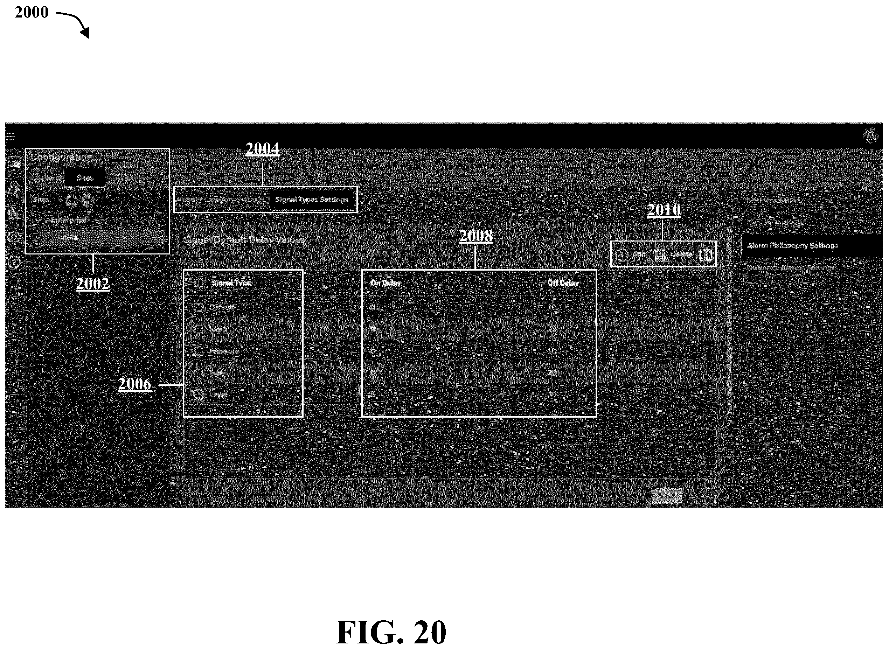

FIG. 20 illustrates an exemplary interactive user interface 2000 according to one or more embodiments of the disclosure. In an embodiment, the interactive user interface 2000 is an interactive user interface of the user computing device 402 that is presented via the visual display 404. In one or more embodiments, a data visualization is rendered via the interactive user interface 2000. In certain embodiments, the data visualization rendered via the interactive user interface 2000 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 2000 presents industrial enterprise configuration element 2002 configured as respective interactive display elements. In one or more embodiments, the industrial enterprise configuration element 2002 includes respective interactive display elements associated with one or more industrial environments (e.g., industrial site 902). In one or more embodiments, one or more industrial environment identifiers associated with the one or more respective industrial environments may be added to the industrial enterprise configuration element 2002 such that the alarm configuration parameters associated with the industrial processes related to the one or more industrial environments may be altered simultaneously (e.g., by employing the same alarm philosophy to each respective industrial environment). Additionally or alternatively, in certain embodiments, the data visualization rendered via the interactive user interface 2000 presents settings selector element 2004 configured as a grouping of interactive display elements. In one or more embodiments, settings selector element 2004 presents respective interactive display elements that are selectable such that interaction with the interactive display elements allows the user computing device system 302 to reconfigure the interactive user interface 2000 based on alarm configuration parameters such as alarm priority and/or alarm signal type.

In certain embodiments, the data visualization rendered via the interactive user interface 2000 presents alarm signal type identifier(s) 2006 configured as respective interactive display elements. In one or more embodiments, alarm signal type identifier(s) 2006 comprise respective interactive display elements associated with one or more types of signals that can be measured (e.g., by a controller in controller-server system 906) in one or more types of industrial processes in an industrial environment including, but not limited to, temperature, pressure, flow, and/or level. In one or more embodiments, the alarm signal type identifier(s) 2006 are associated with respective interactive display elements of alarm delay configuration element 2008 such that the respective interactive display elements of the alarm delay configuration element 2008 provide specific alarm configuration parameters associated with the respective alarm signal type identifier(s) 2006 as they relate to the one or more industrial environment identifiers in the industrial enterprise configuration element 2002. In one or more embodiments, the alarm signal type identifier(s) 2006 and the associated alarm configuration parameters related to the alarm delay configuration element 2008 adhere to the recommendations put forth by one or more standards including, but not limited to, the American National Standards Institute/International Society of Automation (ANSI/ISA) standard 18.2, IEC 62682, and/or EEMUA 191 Rev3. In one or more embodiments, the APO system 502 can configure and transmit alarm tuning recommendation data 322 based on international standards (e.g., such as ANSI/ISA 18.2) such that the alarm configuration parameters associated with one or more industrial processes in an industrial environment are in compliance with the international standards.

Additionally or alternatively, in certain embodiments, the data visualization rendered via the interactive user interface 2000 presents alarm philosophy rule element 2010 configured as a grouping of interactive display elements. In one or more embodiments, alarm philosophy rule element 2010 presents respective interactive display elements configured to add and/or delete alarm rules associated with one or more industrial environment identifiers in the industrial enterprise configuration element 2002. In one or more embodiments, once a new alarm rule is created by alarm philosophy rule element 2010, it is saved in APO 502 linked to the alarms of the alarm management server system 904 and the associated signal type and alarm configuration parameter information is displayed as interactive display elements in the alarm signal type identifier(s) 2006 and the alarm delay configuration element 2008 respectively.

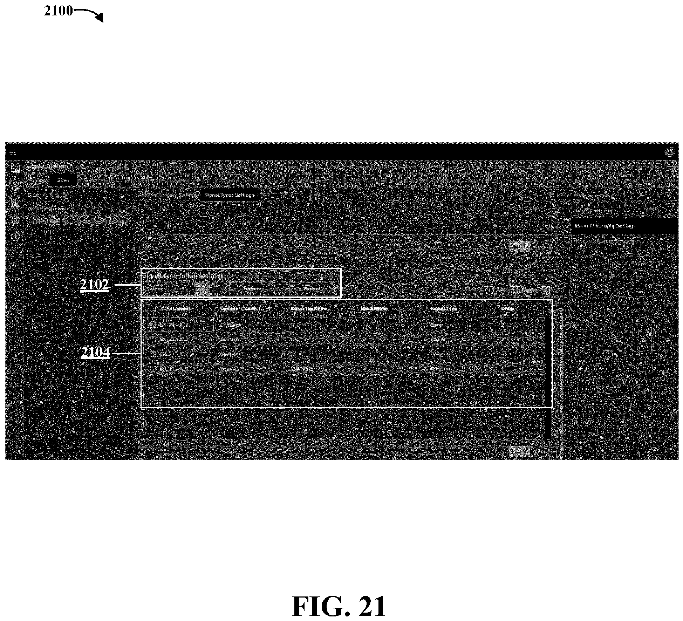

FIG. 21 illustrates an exemplary interactive user interface 2100 according to one or more embodiments of the disclosure. In an embodiment, the interactive user interface 2100 is an interactive user interface of the user computing device 402 that is presented via the visual display 404. In one or more embodiments, a data visualization is rendered via the interactive user interface 2100. In certain embodiments, the data visualization rendered via the interactive user interface 2100 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 2100 presents an interactive display element 2102 and a tag mapping element 2104. In one or more embodiments, the interactive display element 2102 facilitates importing and/or exporting of alarm tag mappings. Additionally, in one or more embodiments, the tag mapping element 2104 allows configuration of rules for controllers to, for example, configure signal types based on point naming conventions. In one or more embodiments, APO system 502 can incorporate alarm labeling conventions that can identify the type of measurement associated with a particular alarm identifier (e.g., flow, temperature, pressure, and/or level) in accordance with one or more international standards (e.g., ANSI/ISA 18.2). In one or more embodiments, APO system 502 can employ the naming conventions to aid in adjusting alarm configuration parameters associated with one or more industrial processes in an industrial processing environment (e.g., industrial site 902). For example, the APO system 502 can employ the naming conventions to employ the appropriate maximum on- and off-delay values for the alarms associated with a controller in the controller-server system 906.

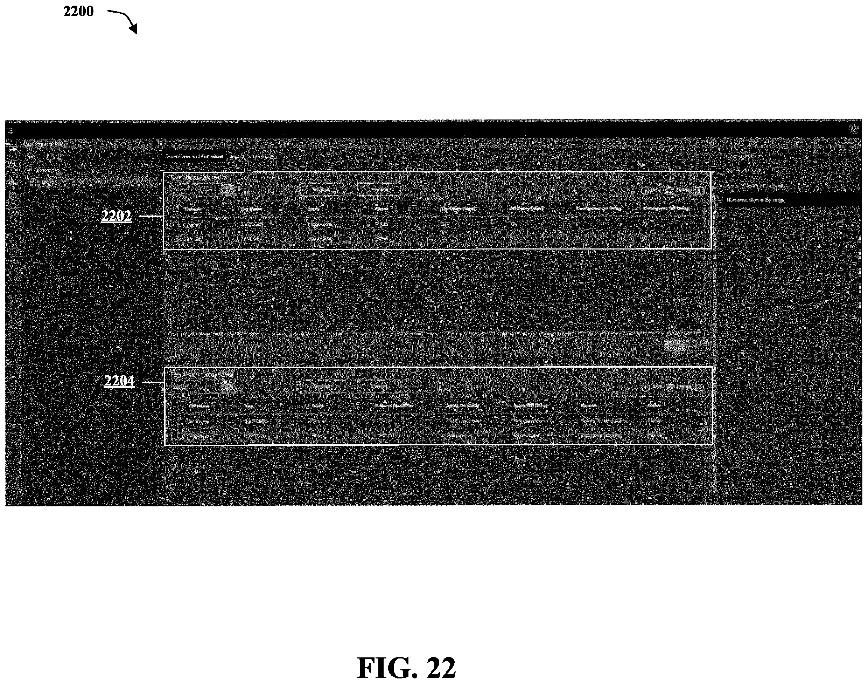

FIG. 22 illustrates an exemplary interactive user interface 2200 according to one or more embodiments of the disclosure. In an embodiment, the interactive user interface 2200 is an interactive user interface of the user computing device 402 that is presented via the visual display 404. In one or more embodiments, a data visualization is rendered via the interactive user interface 2200. In certain embodiments, the data visualization rendered via the interactive user interface 2200 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 2200 presents an alarm tag override element 2202 and an alarm tag exception element 2204. In one or more embodiments, the alarm tag override element 2202 facilitates configuring one or more alarm overrides and alarm tag exception element 2204 facilitates configuring one or more alarm exceptions. In one or more embodiments, the overrides and exceptions executed by alarm tag override element 2202 and alarm tag exception element 2204 are employed by the APO system 502 to supersede and alarm rules set forth in the alarm philosophy rule set associated with a particular industrial environment. For example, in one or more embodiments, the alarm tag override element 2202 can instantiate (via the APO system 502) maximum on- and off-delay values for an alarm identifier which will supersede any delay values derived, for example, by the signal type of the alarm associated with the alarm identifier.

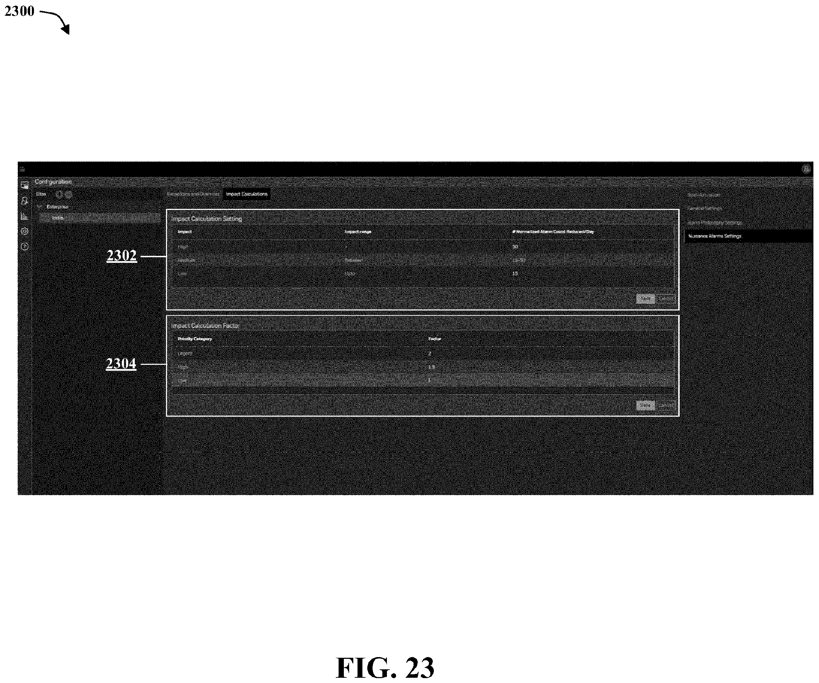

FIG. 23 illustrates an exemplary interactive user interface 2300 according to one or more embodiments of the disclosure. In an embodiment, the interactive user interface 2300 is an interactive user interface of the user computing device 402 that is presented via the visual display 404. In one or more embodiments, a data visualization is rendered via the interactive user interface 2300. In certain embodiments, the data visualization rendered via the interactive user interface 2300 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 2300 presents an interactive display element 2302 and an interactive display element 2304. In one or more embodiments, the interactive display element 2302 facilitates configuring impact calculation settings for prioritization of generated alarms recommendation and interactive display element 2304 facilitates configuring impact calculation factors for prioritization of alarms recommendations.

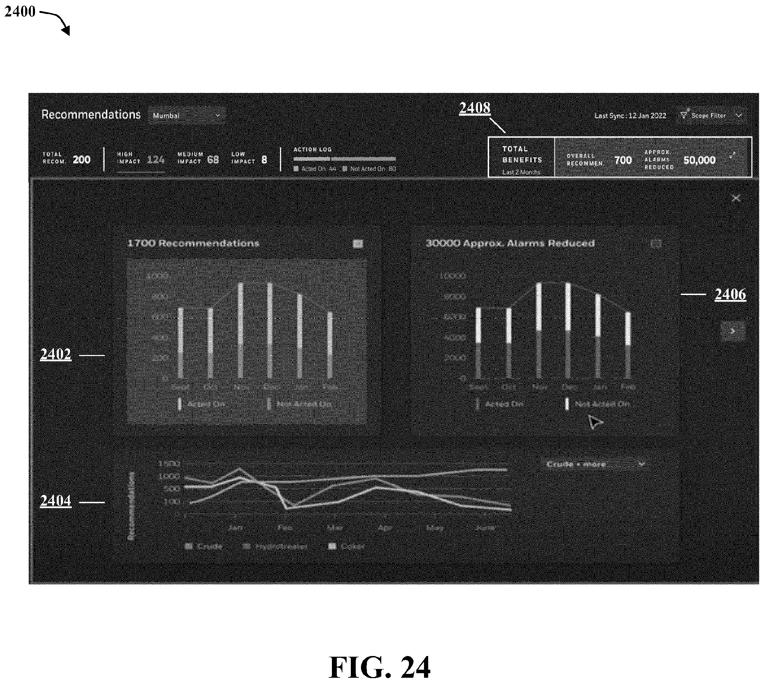

FIG. 24 illustrates an exemplary interactive user interface 2400 according to one or more embodiments of the disclosure. In an embodiment, the interactive user interface 2400 is an interactive user interface of the user computing device 402 that is presented via the visual display 404. In one or more embodiments, a data visualization is rendered via the interactive user interface 2400. In certain embodiments, the data visualization rendered via the interactive user interface 2400 presents a visualization of one or more portions of the alarm tuning recommendation data 322 to facilitate analysis and/or management of the alarm configuration parameters associated with one or more industrial processing environments via the interactive display elements. In certain embodiments, the data visualization rendered via the interactive user interface 2400 presents an interactive display element 2402, an interactive display element 2404, an interactive display element 2406, and an interactive display element 3108. In one or more embodiments, the interactive display element 2402 provides metrics for acted upon alarm tuning recommendations, interactive display element 2404 provides metrics for a alarm tuning recommendations based on one or more operator consoles , interactive display element 2406 provides metrics for the estimated number of reduced alarms based on alarm tuning recommendations, and interactive display element 2408 provides metrics related to the total accrued benefits based on alarm tuning recommendations.

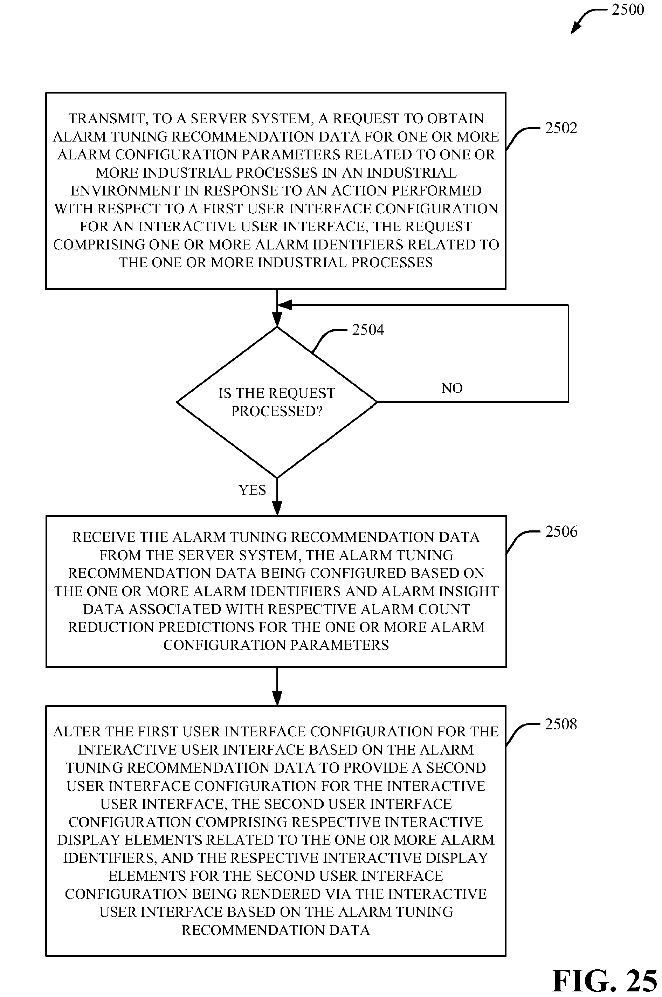

FIG. 25 illustrates a method 2500 for providing prescriptive recommendations of configuration parameters for industrial process alarms, in accordance with one or more embodiments described herein. The method 2500 is associated with the user computing device system 302, for example. For instance, in one or more embodiments, the method 2500 is executed at a device (e.g., the user computing device system 302) with one or more processors and a memory. In one or more embodiments, the method 2500 begins at block 2502 that transmits (e.g., by the communication component 304) a request to obtain alarm tuning recommendation data for one or more alarm configuration parameters related to one or more industrial processes in an industrial environment in response to an action performed with respect to a first user interface configuration for an interactive user interface, the request comprising one or more alarm identifiers related to the one or more industrial processes. The request provides one or more technical improvements such as, but not limited to, facilitating interaction with a user computing device and/or extended functionality for a user computing device.

At block 2504, it is determined whether the request is processed. For example, it can be determined whether the server system (e.g., the APO system 502) has processed the request. If no, block 2504 is repeated to determine whether the request is processed. If yes, the method 2500 proceeds to block 2506. In response to the request, the method 2500 includes a block 2506 that receives (e.g., by communication component 304 and/or the alarm tuning recommendation component 306) the alarm tuning recommendation data from the server system, the alarm tuning recommendation data being configured based on the one or more alarm identifiers and alarm insight data associated with respective alarm count reduction predictions for the one or more alarm configuration parameters. The receiving the alarm tuning recommendation data provides one or more technical improvements such as, but not limited to, extended functionality for a user computing device.

In response to the request, the method 2500 also includes a block 2508 that alters (e.g., by the user interface component 308) the first user interface configuration for the interactive user interface based on the alarm tuning recommendation data to provide a second user interface configuration for the interactive user interface, the second user interface configuration including respective interactive display elements related to the one or more alarm identifiers, and the respective interactive display elements for the second user interface configuration being rendered via the interactive user interface based on the alarm tuning recommendation data. The altering provides one or more technical improvements such as, but not limited to, extended functionality for a user computing device and/or improving accuracy of interactive user interface.

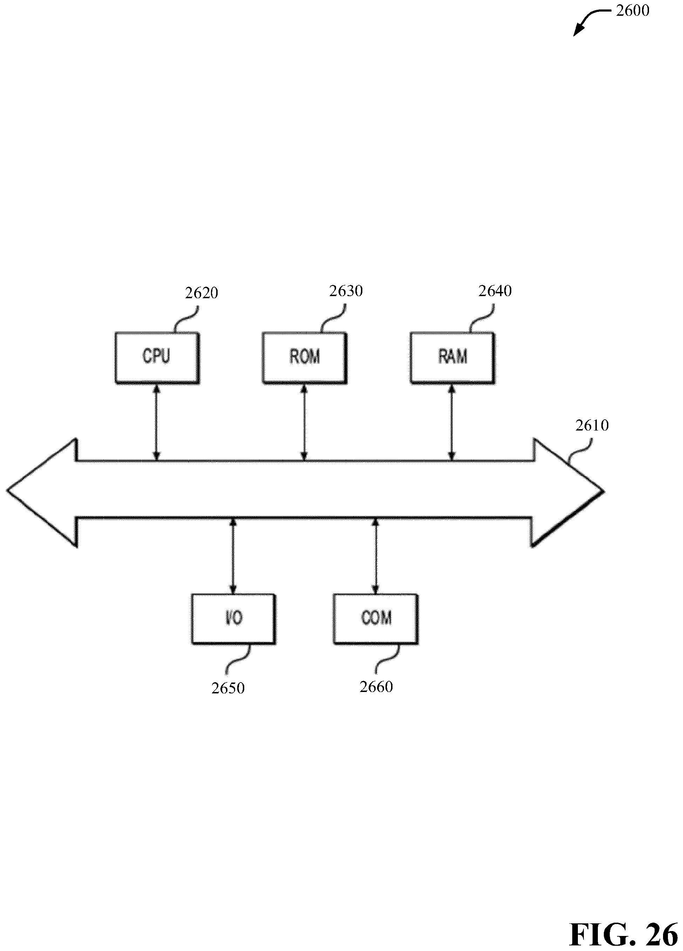

FIG. 26 depicts an example system 2600 that may execute techniques presented herein. FIG. 26 is a simplified functional block diagram of a computer that may be configured to execute techniques described herein, according to exemplary embodiments of the present disclosure. Specifically, the computer (or "platform" as it may not be a single physical computer infrastructure) may include a data communication interface 2660 for packet data communication. The platform also may include a central processing unit ("CPU") 2620, in the form of one or more processors, for executing program instructions. The platform may include an internal communication bus 2610, and the platform also may include a program storage and/or a data storage for various data files to be processed and/or communicated by the platform such as ROM 2630 and RAM 2640, although the system 2600 may receive programming and data via network communications. The system 2600 also may include input and output ports 2650 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multiprocessor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure also may be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments can be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

It is to be appreciated that 'one or more' includes a function being performed by one element, a function being performed by more than one element, e.g., in a distributed fashion, several functions being performed by one element, several functions being performed by several elements, or any combination of the above.

Moreover, it will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processor-executable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

It is intended that the specification and examples be considered as exemplary only, with the scope of the invention solely defined by the appended claims.

## Claims

1. A computer-implemented method (2500), comprising:
transmitting (2502), to a server system, a request (320) to obtain alarm tuning recommendation data (322) for one or more alarm configuration parameters related to one or more industrial processes in an industrial environment in response to an action performed with respect to a first user interface configuration for an interactive user interface, wherein the request (320) comprises one or more alarm identifiers (1710) related to the one or more industrial processes;
in response to the request:
receiving (2506) the alarm tuning recommendation data (322) comprising an alarm count reduction prediction from the server system, wherein the alarm count reduction prediction includes a prediction of a number of alarms reduced based on the one or more alarm configuration parameters, wherein the alarm tuning recommendation data (322) is configured for the one or more alarm identifiers (1710) based on alarm insight data (1214) associated with aggregated alarm data corresponding to the one or more industrial processes; and
altering (2508) the first user interface configuration for the interactive user interface based on the alarm tuning recommendation data (322) to provide a second user interface configuration for the interactive user interface, wherein the second user interface configuration comprises respective interactive display elements related to the one or more alarm identifiers (1710), and wherein the respective interactive display elements for the second user interface configuration are rendered via the interactive user interface based on the alarm tuning recommendation data (322).

2. The method (2500) of claim 1, wherein the alarm tuning recommendation data comprises predicted impact data associated with respective impact classifications for the one or more industrial processes by tuning respective alarm configuration parameters for the one or more industrial processes, and
the method further comprises:
arranging the respective interactive display elements related to the one or more alarm identifiers (1710) based on the predicted impact data.

3. The method (2500) of any one of claims 1-2, wherein the alarm tuning recommendation data comprises predicted optimization data associated with an estimated degree of reduction in a number of alarms based on tuning of respective alarm configuration parameters for the one or more industrial processes, and
the method further comprises:
arranging the respective interactive display elements related to the one or more alarm identifiers (1710) based on the predicted optimization data.

4. The method (2500) of any one of claims 1-3, wherein the alarm tuning recommendation data comprises predicted industrial operations metrics data associated with a predicted performance of the one or more industrial processes based on tuning of respective configuration parameters for the one or more industrial processes, and
the method further comprises:
arranging the respective interactive display elements related to the one or more alarm identifiers (1710) based on the predicted industrial operations metrics data.

5. The method (2500) of any one of claims 1-4, wherein the alarm tuning recommendation data comprises predicted industrial operations metrics data associated with a predicted performance of the one or more industrial processes based on tuning of respective alarm configuration parameters for the one or more industrial processes, and
the altering of the first user interface configuration further comprises:
generating an interactive matrix display element comprising a matrix arrangement of the respective interactive display elements related to the one or more alarm identifiers (1710) based on the predicted industrial operations metrics data.

6. The method (2500) of any one of claims 1-5, the method further comprising:
generating a navigational interactive display element comprising a real-time status of updates to the one or more alarm identifiers (1710); and
in response to an interaction with respect to the navigational interactive display element, altering the second user interface configuration for the interactive user interface to provide a third user interface configuration for the interactive user interface, and wherein the third user interface configuration provides an ability to alter respective alarm configuration parameters for the one or more industrial processes.

7. The method (2500) of any one of claims 1-6, the method further comprising:
transmitting one or more altered tuning values associated with the alarm tuning recommendation data to one or more controllers related to the one or more industrial processes, wherein the one or more altered tuning values includes a respective optimized value for the one or more industrial processes.

8. The method (2500) of any one of claims 1-7, the method further comprising:
in response to the request, interfacing with one or more machine learning models configured to generate at least a portion of the respective alarm count reduction predictions.

9. The method (2500) of any one of claims 1-7, the method further comprising:
in response to the request, interfacing with the server system to generate at least a portion of the alarm tuning recommendation data based on an alarm philosophy rule set.

10. The method (2500) of any one of claims 1-9, the method further comprising:
receiving a rejection indicator for an alarm tuning recommendation associated with the alarm tuning recommendation data; and
providing updated training data associated with the rejection indicator to a machine learning model configured to provide the alarm insight data (1214), wherein the machine learning model is configured learn from the rejection indicator to improve future alarm tuning recommendations.

11. The method (2500) of any one of claims 1-9, the method further comprising:
receiving an acceptance indicator for an alarm tuning recommendation associated with the alarm tuning recommendation data via the interactive user interface; and
transmitting the acceptance indicator to the server system.

12. A system (302), comprising:
one or more processors (310);
a memory (312); and
one or more programs stored in the memory (312), the one or more programs comprising instructions which, when executed by the one or more processors (310), cause the system (302) to carry out the method of any of claims 1 to 11.

13. One or more computer programs comprising instructions which, when executed by a computer processor, cause the computer processor to carry out the method of any of claims 1 to 11.

14. A non-transitory computer readable storage medium having the one or more computer programs of claim 13 stored thereon.

## Patentansprüche

1. Computerimplementiertes Verfahren (2500), umfassend:
Übertragen (2502), an ein Serversystem, einer Anforderung (320), Alarmeinstellungsempfehlungsdaten (322) für einen oder mehrere Alarmkonfigurationsparameter, die einen oder mehrere Industrieprozesse in einer Industrieumgebung betreffen, als Antwort auf eine Maßnahme zu erhalten, die in Bezug auf eine erste Benutzerschnittstellenkonfiguration für eine interaktive Benutzerschnittstelle durchgeführt wird, wobei die Anforderung (320) eine oder mehrere Alarmkennungen (1710) umfasst, die den einen oder die mehreren Industrieprozesse betreffen;
als Antwort auf die Anforderung:
Empfangen (2506) der Alarmeinstellungsempfehlungsdaten (322), umfassend eine Alarmzahlreduktionsvorhersage, von dem Serversystem, wobei die Alarmzahlreduktionsvorhersage eine Vorhersage einer auf Basis des einen oder der mehreren Alarmkonfigurationsparameter reduzierten Anzahl von Alarmen beinhaltet, wobei die Alarmeinstellungsempfehlungsdaten (322) für die eine oder die mehreren Alarmkennungen (1710) auf Basis von Alarmerkenntnisdaten (1214) konfiguriert sind, die aggregierten Alarmdaten zugehörig sind, die dem einen oder den mehreren Industrieprozessen entsprechen; und
Ändern (2508) der ersten Benutzerschnittstellenkonfiguration für die interaktive Benutzerschnittstelle auf Basis der Alarmeinstellungsempfehlungsdaten (322), um eine zweite Benutzerschnittstellenkonfiguration für die interaktive Benutzerschnittstelle bereitzustellen, wobei die zweite Benutzerschnittstellenkonfiguration jeweilige interaktive Anzeigeelemente umfasst, die die eine oder die mehreren Alarmkennungen (1710) betreffen, und wobei die jeweiligen interaktiven Anzeigeelemente für die zweite Benutzerschnittstellenkonfiguration über die interaktive Benutzerschnittstelle auf Basis der Alarmeinstellungsempfehlungsdaten (322) wiedergegeben werden.

2. Verfahren (2500) nach Anspruch 1, wobei die Alarmeinstellungsempfehlungsdaten vorhergesagte Auswirkungsdaten, die jeweiligen Auswirkungsklassifizierungen zugehörig sind, für den einen oder die mehreren Industrieprozesse umfassen, durch Einstellen von jeweiligen Alarmkonfigurationsparametern für den einen oder die mehreren Industrieprozesse, und
wobei das Verfahren ferner Folgendes umfasst:
Anordnen der jeweiligen interaktiven Anzeigeelemente, die die eine oder die mehreren Alarmkennungen (1710) betreffen, auf Basis der vorhergesagten Auswirkungsdaten.

3. Verfahren (2500) nach einem der Ansprüche 1 bis 2, wobei die Alarmeinstellungsempfehlungsdaten vorhergesagte Optimierungsdaten umfassen, die einem geschätzten Grad der Reduktion einer Anzahl von Alarmen auf Basis des Einstellens jeweiliger Alarmkonfigurationsparameter für den einen oder die mehreren Industrieprozesse zugehörig sind, und
wobei das Verfahren ferner Folgendes umfasst:
Anordnen der jeweiligen interaktiven Anzeigeelemente, die die eine oder die mehreren Alarmkennungen (1710) betreffen, auf Basis der vorhergesagten Optimierungsdaten.

4. Verfahren (2500) nach einem der Ansprüche 1 bis 3, wobei die Alarmeinstellungsempfehlungsdaten vorhergesagte Industriebetriebsmetrikdaten umfassen, die einer vorhergesagten Leistung des einen oder der mehreren Industrieprozesse auf Basis des Einstellens jeweiliger Konfigurationsparameter für den einen oder die mehreren Industrieprozesse zugehörig sind, und
wobei das Verfahren ferner Folgendes umfasst:
Anordnen der jeweiligen interaktiven Anzeigeelemente, die die eine oder die mehreren Alarmkennungen (1710) betreffen, auf Basis der vorhergesagten Industriebetriebsmetrikdaten.

5. Verfahren (2500) nach einem der Ansprüche 1 bis 4, wobei die Alarmeinstellungsempfehlungsdaten vorhergesagte Industriebetriebsmetrikdaten umfassen, die einer vorhergesagten Leistung des einen oder der mehreren Industrieprozesse auf Basis des Einstellens jeweiliger Alarmkonfigurationsparameter für den einen oder die mehreren Industrieprozesse zugehörig sind, und
das Ändern der ersten Benutzerschnittstellenkonfiguration ferner Folgendes umfasst:
Erzeugen eines interaktiven Matrixanzeigeelements, umfassend eine Matrixanordnung der jeweiligen interaktiven Anzeigeelemente, die die eine oder die mehreren Alarmkennungen (1710) betreffen, auf Basis der vorhergesagten Industriebetriebsmetrikdaten.

6. Verfahren (2500) nach einem der Ansprüche 1 bis 5, das Verfahren ferner umfassend:
Erzeugen eines navigationsbezogenen interaktiven Anzeigeelements, umfassend einen Echtzeitstatus von Aktualisierungen an der einen oder den mehreren Alarmkennungen (1710); und
als Antwort auf eine Interaktion in Bezug auf das navigationsbezogene interaktive Anzeigeelement, Ändern der zweiten Benutzerschnittstellenkonfiguration für die interaktive Benutzerschnittstelle, um eine dritte Benutzerschnittstellenkonfiguration für die interaktive Benutzerschnittstelle bereitzustellen, und wobei die dritte Benutzerschnittstellenkonfiguration eine Fähigkeit bereitstellt, jeweilige Alarmkonfigurationsparameter für den einen oder die mehreren Industrieprozesse zu ändern.

7. Verfahren (2500) nach einem der Ansprüche 1 bis 6, das Verfahren ferner umfassend:
Übertragen eines oder mehrerer geänderter Einstellungswerte, die den Alarmeinstellungsempfehlungsdaten zugehörig sind, an eine oder mehrere Steuerungen, die den einen oder die mehreren Industrieprozesse betreffen, wobei der eine oder die mehreren geänderten Einstellungswerte einen jeweiligen optimierten Wert für den einen oder die mehreren Industrieprozesse beinhalten.

8. Verfahren (2500) nach einem der Ansprüche 1 bis 7, das Verfahren ferner umfassend:
als Antwort auf die Anforderung, Verbinden mit einem oder mehreren Maschinenlernmodellen, die dazu konfiguriert sind, mindestens einen Teil der jeweiligen Alarmzahlreduktionsvorhersagen zu erzeugen.

9. Verfahren (2500) nach einem der Ansprüche 1 bis 7, das Verfahren ferner umfassend:
als Antwort auf die Anforderung, Verbinden mit dem Serversystem, um mindestens einen Teil der Alarmeinstellungsempfehlungsdaten auf Basis eines Alarmphilosophieregelsatzes zu erzeugen.

10. Verfahren (2500) nach einem der Ansprüche 1 bis 9, das Verfahren ferner umfassend:
Empfangen eines Ablehnungsindikators für eine Alarmeinstellungsempfehlung, die den Alarmeinstellungsempfehlungsdaten zugehörig ist; und
Bereitstellen von aktualisierten Trainingsdaten, die dem Ablehnungsindikator zugehörig sind, an ein Maschinenlernmodell, das dazu konfiguriert ist, die Alarmerkenntnisdaten (1214) bereitzustellen, wobei das Maschinenlernmodell dazu konfiguriert ist, von dem Ablehnungsindikator zu lernen, um künftige Alarmeinstellungsempfehlungen zu verbessern.

11. Verfahren (2500) nach einem der Ansprüche 1 bis 9, das Verfahren ferner umfassend:
Empfangen eines Annahmeindikators für eine Alarmeinstellungsempfehlung, die den Alarmeinstellungsempfehlungsdaten zugehörig ist, über die interaktive Benutzerschnittstelle; und
Übertragen des Annahmeindikators an das Serversystem.

12. System (302), umfassend:
einen oder mehrere Prozessoren (310);
einen Speicher (312); und
ein oder mehrere Programme, die in dem Speicher (312) gespeichert sind, wobei das eine oder die mehreren Programme Anweisungen umfassen, die bei Ausführung durch den einen oder die mehreren Prozessoren (310) das System (302) veranlassen, das Verfahren nach einem der Ansprüche 1 bis 11 umzusetzen.

13. Ein oder mehrere Computerprogramme, umfassend Anweisungen, die bei Ausführung durch einen Computerprozessor den Computerprozessor veranlassen, das Verfahren nach einem der Ansprüche 1 bis 11 umzusetzen.

14. Nicht transitorisches computerlesbares Speichermedium, das das eine oder die mehreren darauf gespeicherten Computerprogramme nach Anspruch 13 aufweist.

## Revendications

1. Procédé mis en œuvre par ordinateur (2500), comprenant :
la transmission (2502), à un système serveur, d'une demande (320) pour obtenir des données de recommandation de réglage d'alarme (322) pour un ou plusieurs paramètres de configuration d'alarme apparentés à un ou plusieurs processus industriels dans un environnement industriel en réponse à une action effectuée par rapport à une première configuration d'interface utilisateur pour une interface utilisateur interactive, dans lequel la demande (320) comprend un ou plusieurs identifiants d'alarme (1710) apparentés au ou aux processus industriels ;
en réponse à la demande :
la réception (2506) des données de recommandation de réglage d'alarme (322) comprenant une prédiction de réduction de comptage d'alarme à partir du système serveur, dans lequel la prédiction de réduction de comptage d'alarme inclut une prédiction d'un nombre d'alarmes réduites sur la base du ou des paramètres de configuration d'alarme, dans lequel les données de recommandation de réglage d'alarme (322) sont configurées pour le ou les identifiants d'alarme (1710) sur la base de données d'aperçu d'alarme (1214) associées à des données d'alarme regroupées correspondant au ou aux processus industriels ; et
la modification (2508) de la première configuration d'interface utilisateur pour que l'interface utilisateur interactive fournisse, sur la base des données de recommandation de réglage d'alarme (322), une deuxième configuration d'interface utilisateur pour l'interface utilisateur interactive, dans laquelle la deuxième configuration d'interface utilisateur comprend des éléments d'affichage interactifs respectifs apparentés au ou aux identifiants d'alarme (1710), et dans laquelle les éléments d'affichage interactifs respectifs pour la deuxième configuration d'interface utilisateur sont rendus par l'intermédiaire de l'interface utilisateur interactive sur la base des données de recommandation de réglage d'alarme (322).

2. Procédé (2500) selon la revendication 1, dans lequel les données de recommandation de réglage d'alarme comprennent des données d'influence prédites associées à des classifications d'influence respectives pour le ou les processus industriels par réglage de paramètres de configuration d'alarme respectifs pour le ou les processus industriels, et
le procédé comprend en outre :
l'agencement des éléments d'affichage interactifs respectifs apparentés au ou aux identifiants d'alarme (1710) sur la base des données d'influence prédites.

3. Procédé (2500) selon l'une quelconque des revendications 1 à 2, dans lequel les données de recommandation de réglage d'alarme comprennent des données d'optimisation prédites associées à un degré estimé de réduction dans un nombre d'alarmes sur la base d'un réglage de paramètres de configuration d'alarme respectifs pour le ou les processus industriels, et
le procédé comprend en outre :
l'agencement des éléments d'affichage interactifs respectifs apparentés au ou aux identifiants d'alarme (1710) sur la base des données d'optimisation prédites.

4. Procédé (2500) selon l'une quelconque des revendications 1 à 3, dans lequel les données de recommandation de réglage d'alarme comprennent des données de métriques d'opérations industrielles prédites associées à une performance prédite du ou des processus industriels sur la base d'un réglage de paramètres de configuration respectifs pour le ou les processus industriels, et
le procédé comprend en outre :
l'agencement des éléments d'affichage interactifs respectifs apparentés au ou aux identifiants d'alarme (1710) sur la base des données de métriques d'opérations industrielles prédites.

5. Procédé (2500) selon l'une quelconque des revendications 1 à 4, dans lequel les données de recommandation de réglage d'alarme comprennent des données de métriques d'opérations industrielles prédites associées à une performance prédite du ou des processus industriels sur la base d'un réglage de paramètres de configuration d'alarme respectifs pour le ou les processus industriels, et
la modification de la première configuration d'interface utilisateur comprend en outre :
la génération d'un élément d'affichage à matrice interactive comprenant un agencement matriciel des éléments d'affichage interactifs respectifs apparentés au ou aux identifiants d'alarme (1710) sur la base des données de métriques d'opérations industrielles prédites.

6. Procédé (2500) selon l'une quelconque des revendications 1 à 5, le procédé comprenant en outre :
la génération d'un élément d'affichage interactif de navigation comprenant un état en temps réel de mises à jour du ou des identifiants d'alarme (1710) ; et
en réponse à une interaction par rapport à l'élément d'affichage interactif de navigation, la modification de la deuxième configuration d'interface utilisateur pour que l'interface utilisateur interactive fournisse une troisième configuration d'interface utilisateur pour l'interface utilisateur interactive, et dans lequel la troisième configuration d'interface utilisateur fournit une capacité à modifier des paramètres de configuration d'alarme respectifs pour le ou les processus industriels.

7. Procédé (2500) selon l'une quelconque des revendications 1 à 6, le procédé comprenant en outre :
la transmission d'une ou de plusieurs valeurs de réglages modifiées associées aux données de recommandation de réglage d'alarme à un ou plusieurs dispositifs de commande apparentés au ou aux processus industriels, dans lequel la ou les valeurs de réglages modifiées incluent une valeur optimisée respective pour le ou les processus industriels.

8. Procédé (2500) selon l'une quelconque des revendications 1 à 7, le procédé comprenant en outre :
en réponse à la demande, l'interfaçage avec un ou plusieurs modèles d'apprentissage automatique configurés pour générer au moins une partie des prédictions de réduction de comptage d'alarme respectifs.

9. Procédé (2500) selon l'une quelconque des revendications 1 à 7, le procédé comprenant en outre :
en réponse à la demande, l'interfaçage avec le système serveur pour générer au moins une partie des données de recommandation de réglage d'alarme sur la base d'un ensemble de règles de philosophie d'alarme.

10. Procédé (2500) selon l'une quelconque des revendications 1 à 9, le procédé comprenant en outre :
la réception d'un indicateur de rejet pour une recommandation de réglage d'alarme associée aux données de recommandation de réglage d'alarme ; et
la fourniture de données d'entraînement mises à jour associées à l'indicateur de rejet à un modèle d'apprentissage automatique configuré pour fournir les données d'aperçu d'alarme (1214), dans lequel le modèle d'apprentissage automatique est configuré pour apprendre à partir de l'indicateur de rejet pour améliorer de futures recommandations de réglage d'alarme.

11. Procédé (2500) selon l'une quelconque des revendications 1 à 9, le procédé comprenant en outre :
la réception d'un indicateur d'acceptation pour une recommandation de réglage d'alarme associée aux données de recommandation de réglage d'alarme par l'intermédiaire de l'interface utilisateur interactive ; et
la transmission de l'indicateur d'acceptation au système serveur.

12. Système (302), comprenant :
un ou plusieurs processeurs (310) ;
une mémoire (312) ; et
un ou plusieurs programmes stockés dans la mémoire (312), le ou les programmes comprenant des instructions qui, lorsqu'elles sont exécutées par le ou les processeurs (310), amènent le système (302) à mettre en œuvre le procédé selon l'une quelconque des revendications 1 à 11.

13. Un ou plusieurs programmes informatiques comprenant des instructions qui, lorsqu'elles sont exécutées par un processeur d'ordinateur, amènent le processeur d'ordinateur à mettre en œuvre le procédé selon l'une quelconque des revendications 1 à 11.

14. Support de stockage non transitoire lisible par ordinateur présentant le ou les programmes informatiques selon la revendication 13 stockés sur celui-ci.
